(19) Europäisches Patentamt / European Patent Office / Office européen des brevets

(11) **EP 3 916 050 A1**

(12) **EUROPEAN PATENT APPLICATION**
published in accordance with Art. 153(4) EPC

(43) Date of publication:
**01.12.2021 Bulletin 2021/48**

(21) Application number: **20744612.1**

(22) Date of filing: **14.01.2020**

(51) Int Cl.:
*C08L 25/14* (2006.01)    *C08L 53/02* (2006.01)

(86) International application number:
**PCT/JP2020/000856**

(87) International publication number:
**WO 2020/153169 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2019 JP 2019009876**

(71) Applicant: **Asahi Kasei Kabushiki Kaisha Tokyo 1000006 (JP)**

(72) Inventor: **SATO, Naohiko Tokyo 100-0006 (JP)**

(74) Representative: **Strehl Schübel-Hopf & Partner Maximilianstrasse 54 80538 München (DE)**

(54) **BLOCK COPOLYMER COMPOSITION, MOLDED ARTICLE, METHOD FOR PRODUCING MOLDED ARTICLE, AND METHOD FOR ADJUSTING HAZE VALUE OF MOLDED ARTICLE**

(57)    Provided is a block copolymer composition comprising block copolymer a and copolymer b with block copolymer a/copolymer b (mass ratio) = 20/80 to 75/25, the block copolymer a comprises a polymer block mainly comprising a vinyl aromatic hydrocarbon monomer unit, and a polymer block mainly comprising a conjugated diene monomer unit with vinyl aromatic hydrocarbon monomer unit/conjugated diene monomer unit = 50/50 to 95/5, the copolymer b is a random copolymer of a vinyl aromatic hydrocarbon monomer unit and a (meth)acrylic acid and/or (meth)acrylic acid alkyl ester monomer unit with vinyl aromatic hydrocarbon monomer unit/((meth)acrylic acid and/or (meth)acrylic acid alkyl ester monomer unit) = 50/50 to 90/10, the copolymer b has Mw of 150,000 to 250,000 and a half width of 30% or more in a molecular weight distribution curve, and an outer haze value measured in accordance with ISO14782 is 4.0% or less.

EP 3 916 050 A1

## Description

Technical Field

The present invention relates to a block copolymer composition, a molded product, a method for producing a molded product, and a method for adjusting a haze value of a molded product.

Background Art

In general, vinyl aromatic hydrocarbon-type resins (e.g., styrene-type resins) are excellent in molding processability, rigidity, transparency, etc., are inexpensive, have low specific gravity, and are also economically excellent. Therefore, molded products obtained by molding such vinyl aromatic hydrocarbon-type resins (e.g., styrene-type resins) are widely used in various fields, as injection-molded products, sheet-shaped molded products extruded from T dies, round or angular tube-shaped profile extruded products extruded from profile molds, and the like.

Heretofore, sheet-shaped or tube-shaped profile extruded products constituted by polycarbonate resin or vinyl aromatic hydrocarbon-type resins (e.g., styrene-type resins and MBS resin) have been used as electronic component packaging materials such as carrier tapes for mounting and/or packing electronic components (e.g., integrated circuits (IC) and large-scale integrated circuits (LSI)) to electronics, or magazine tubes (also called magazine sticks) for mounting and/or packing connectors or various semiconductor components.

The electronic component packaging materials such as carrier tapes or magazine tubes are required from their use forms to have well-balanced favorable mechanical physical properties such as transparency (visibility), rigidity, impact resistance, and molding processability. Various studies have been made to improve these characteristics and to obtain favorable physical property balance.

MBS resin (methyl methacrylate/butadiene/styrene copolymer resin) is used widely and suitably as a material for obtaining electronic component packaging materials, such as carrier tapes or magazine tubes, excellent in transparency, rigidity, and impact resistance.

As for injection-molded products, molded products having high dimensional accuracy with less warpage derived from a graft particle rubber structure, in addition to the characteristics mentioned above, are produced.

However, when MBS resin having a structure where butadiene rubber is dispersed as particles, obtained by a graft polymerization method is prepared into a carrier tape obtained from a T die sheet, folding strength is not always sufficient because the MS resin serves as matrix. Besides, powdery or beard-like burrs are easily generated at the time of slit processing and might cause contamination if attached to electronic components to be packed, disadvantageously leading to a complicated aftertreatment step.

Since the MBS resin becomes cloudy by blending with a thermoplastic elastomer such as a styrene-butadiene block copolymer, it is basically difficult to change its physical property balance. Thus, the MBS resin is disadvantageously limited by use of this resin alone.

In order to solve the problems mentioned above, a resin composition has been obtained by: appropriately selecting a combination of a copolymer consisting of an aromatic vinyl compound monomer (e.g., styrene) and a (meth)acrylic acid and/or (meth)acrylic acid alkyl ester monomer (e.g., methyl methacrylate; MMA) (in the present specification, also referred to as "MS resin") and having specific composition, and a block copolymer consisting of an aromatic vinyl compound monomer (e.g., styrene) and a conjugated diene compound monomer (e.g., 1,3-butadiene) (in the present specification, also referred to as "SBC resin") and having specific composition, wherein the resins to be combined have matched refractive indexes; and adjusting the compositional ratio therebetween. As a result, extruded products having a wide range of physical properties from high flexibility to high rigidity can be produced. Thus, various resin compositions have been developed which have high folding strength and high impact strength and are less likely to cause powdery or beard-like burrs in processing the extruded products.

Such a resin composition containing the MS resin and the SBC resin can exert a high level of transparency, particularly, in injection-molded products, by appropriately selecting a combination of the resins having matched refractive indexes. MS resin-rich composition allows the resin composition to exhibit high rigidity and can improve impact strength as compared with the MS resin alone.

On the other hand, SBC resin-rich composition allows the resin composition to exhibit high impact resistance and can drastically improve rigidity as compared with the SBC resin alone. Thus, injection-molded products that have the good features of the MS resin and the SBC resin together and exert excellent physical property balance can be obtained.

The resin composition containing the MS resin and the SBC resin is injection-molded to obtain a molded product having favorable transparency. This is because, since the resin composition is solidified by cooing inside a mold with strong pressure applied thereto in a cooling process, a molded product having high transparency with almost no difference between an inner haze and an outer haze as to its haze values is obtained in the case of a molded product having a mirrored surface.

On the other hand, in the case of obtaining a molded product by extrusion molding using the resin composition containing the MS resin and the SBC resin, it is difficult to cool the resin composition with strong pressure applied thereto in a cooling process. A further problem of this resin composition, which is a blend of originally noncompatible resins, is to easily generate a pearskin extrudate skin.

In light of the problems mentioned above, a resin composition in which the compositional ratio of methacrylic acid ester of the MS resin and the reduced viscosity of the MS resin are controlled is disclosed in order to prevent an extrudate skin from becoming pearskin and to improve the transparency of a molded product in the case of obtaining a molded product by extrusion molding using the resin composition containing the MS resin and the SBC resin (see e.g., Patent Literature 1).

Citation List

Patent Literature

Patent Literature 1: Japanese Patent Laid-Open No. 6-240098

Summary of Invention

Technical Problem

As mentioned above, a molded product obtained by injection-molding a resin composition containing MS resin and SBC resin exerts favorable transparency owing to their matched refractive indexes.

However, a problem of the resin composition, which is a blend of originally noncompatible resins, is large warpage as compared with the MBS resin used alone, in the case of producing a thin plate-like injection-molded product when the melt viscosity of the MS resin is higher than that of the SBC resin.

A problem of a molded product obtained by extruding the resin composition containing the MS resin and the SBC resin is a high haze value due to a pearskin extrudate skin of the extruded product on which transmitted visible light is scattered, because the resin composition of the combined resins having matched refractive indexes, which may have favorable transparency, is a blend of originally noncompatible resins.

A molded product having a pearskin extrudate skin exerts high transparency without scattering transmitted light and has a low inner haze, by cancelling fine surface asperities through coating with liquid paraffin. However, a problem of this molded product is a high outer haze value and the occurrence of a phenomenon in which a distant object is blurred when viewed through the molded product, because the pearskin extrudate skin itself scatters transmitted light by its fine surface asperities.

In light of these problems, it has been desired to develop an extruded product having excellent surface smoothness and favorable transparency that allow a distant object to be clearly viewed through the molded product.

A feature of the technique disclosed in Patent Literature 1 is to control the reduced viscosity of the MS resin and to control the compositional ratio of methacrylic acid ester of the MS resin. However, decrease in viscosity of the MS resin is practical for the technique disclosed in Patent Literature 1.

However, decrease in average molecular weight of the MS resin for decrease in viscosity of the MS resin disadvantageously reduces mechanical physical properties such as impact strength and folding strength at the same time therewith, though the transparency of an extruded product is drastically improved. The technique disclosed in Patent Literature 1 must limit the compositional ratio of methacrylic acid ester of the MS resin to a range as low as less than 18% by mass, and at the same time, must decrease the content of conjugated diolefin in a linear block copolymer (SBC resin) having a refractive index matched with that of the MS resin as to the SBC resin to be combined with the MS resin. As a result, only a resin composition having poor flexibility and impact resistance is disadvantageously obtained.

Thus, there has been a demand for a resin composition that can achieve the transparency and mechanical physical properties of a molded product at a high level without drastically decreasing the average molecular weight of the MS resin.

Accordingly, an object of the present invention is to provide a resin composition containing MS resin and SBC resin, wherein the resin composition has favorable balance among mechanical characteristics, produces a molded product having favorable mold reproducibility and excellent molding processability with less warpage in injection molding while producing a molded product having favorable transparency in extrusion molding, and can be suitably used as a material for an electronic component packaging material, a food packaging material, and a medical equipment packaging material.

Solution to Problem

The present inventors have conducted diligent studies to solve the problems of the conventional techniques mentioned above, and consequently completed the present invention by finding that a molded product excellent in balance among mechanical physical properties and excellent in molding processability and transparency can be obtained by stipulating the configurations of block copolymer a and copolymer b in a block copolymer composition comprising specific block copolymer a and copolymer b.

Specifically, the present invention is as follows.

[1] A block copolymer composition comprising block copolymer a and copolymer b, wherein

a mass ratio between the block copolymer a and the copolymer b is block copolymer a/copolymer b = 20/80 to 75/25,

the block copolymer a is a block copolymer comprising at least one polymer block mainly comprising a vinyl aromatic hydrocarbon monomer unit, and at least one polymer block mainly comprising a conjugated diene monomer unit,

a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,

the copolymer b is a random copolymer of a vinyl aromatic hydrocarbon monomer unit and a (meth)acrylic acid and/or (meth)acrylic acid alkyl ester monomer unit,

a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10,

the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve, and

an outer haze value measured in accordance with ISO14782 is 4.0% or less.

[2] A molded product of a block copolymer composition comprising block copolymer a and copolymer b, wherein

a mass ratio between the block copolymer a and the copolymer b is block copolymer a/copolymer b = 20/80 to 75/25,

the block copolymer a is a block copolymer comprising at least one polymer block mainly comprising a vinyl aromatic hydrocarbon monomer unit, and at least one polymer block mainly comprising a conjugated diene monomer unit,

a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,

the copolymer b is a random copolymer of a vinyl aromatic hydrocarbon monomer unit and a (meth)acrylic acid and/or (meth)acrylic acid alkyl ester monomer unit,

a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10,

the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve, and

an outer haze value measured in accordance with ISO14782 is 4.0% or less.

[3] The molded product according to the above [2], wherein

the copolymer b is a mixture of copolymers having at least two types of weight-average molecular weights, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60, and

the outer haze value measured in accordance with ISO14782 is 4.0% or less.

[4] The block copolymer composition according to the above [1], wherein the copolymer b is a mixture of copolymers having at least two types of weight-average molecular weights, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60.

[5] The block copolymer composition according to the above [1] or [4], wherein the block copolymer a has at least two polymer blocks each mainly comprising a vinyl aromatic hydrocarbon monomer unit.

[6] The molded product according to the above [2] or [3], wherein the block copolymer a has at least two polymer blocks each mainly comprising a vinyl aromatic hydrocarbon monomer unit.

[7] The block copolymer composition according to any one of the above [1], [4], and [5], wherein

at least one peak molecular weight derived from the block copolymer a is present within a molecular weight range of 30,000 or larger and 300,000 or smaller in the molecular weight distribution curve measured by a gel permeation chromatography measurement method,

a number-average molecular weight (Mn) of polymer block S mainly comprising a vinyl aromatic hydrocarbon monomer unit in the block copolymer a is 10,000 or larger and 60,000 or smaller, and

a molecular weight distribution (Mw/Mn) of the polymer block S is 1.5 or more and 4.0 or less.

[8] The molded product according to any one of the above [2], [3], and [6], wherein

at least one peak molecular weight derived from the block copolymer a is present within a molecular weight range of 30,000 or larger and 300,000 or smaller in the molecular weight distribution curve measured by a gel permeation chromatography measurement method,

a number-average molecular weight (Mn) of polymer block S mainly comprising a vinyl aromatic hydrocarbon monomer unit in the block copolymer a is 10,000 or larger and 60,000 or smaller, and

a molecular weight distribution (Mw/Mn) of the polymer block S is 1.5 or more and 4.0 or less.

[9] The block copolymer composition according to any one of the above [1], [4], [5], and [7], wherein the (meth)acrylic acid and/or (meth)acrylic acid alkyl ester monomer unit which is a constituent unit of the copolymer b is a methyl methacrylate monomer unit.

[10] The molded product according to any one of the above [2], [3], [6], and [8], wherein the (meth)acrylic acid and/or (meth)acrylic acid alkyl ester monomer unit which is a constituent unit of the copolymer b is a methyl methacrylate monomer unit.

[11] The block copolymer composition according to any one of the above [1], [4], [5], [7], and [9], wherein a Vicat softening temperature stipulated by ISO306 and measured at a temperature increase rate of 50°C/hr with a load of 10 N is 80°C or higher.

[12] The molded product according to any one of the above [2], [3], [6], [8], and [10], wherein a Vicat softening temperature stipulated by ISO306 and measured at a temperature increase rate of 50°C/hr with a load of 10 N is 80°C or higher.

[13] The molded product according to any one of the above [2], [3], [6], [8], [10], and [12] which is an extruded product.

[14] The molded product according to any one of the above [2], [3], [6], [8], [10], and [12] which is an injection-molded product.

[15] A method for producing a molded product, comprising the steps of:

mixing block copolymer a and copolymer b to obtain a mixture; and
extruding or injecting the mixture, wherein
the block copolymer a is a block copolymer comprising at least one polymer block mainly comprising a vinyl aromatic hydrocarbon monomer unit, and at least one polymer block mainly comprising a conjugated diene monomer unit,
a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,
the copolymer b is a random copolymer of a vinyl aromatic hydrocarbon monomer unit and a (meth)acrylic acid and/or (meth)acrylic acid alkyl ester monomer unit,
a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10, and

the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve.

[16] A method for producing a molded product, comprising the steps of:

mixing block copolymer a and copolymer b to obtain a mixture; and

extruding or injecting the mixture, wherein

the block copolymer a is a block copolymer comprising at least one polymer block mainly comprising a vinyl aromatic hydrocarbon monomer unit, and at least one polymer block mainly comprising a conjugated diene monomer unit,

a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,

the copolymer b is a random copolymer of a vinyl aromatic hydrocarbon monomer unit and a (meth)acrylic acid and/or (meth)acrylic acid alkyl ester monomer unit,

a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10, and

the copolymer b is a mixture of at least two types of copolymers, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60.

[17] The molded product according to any one of the above [2], [3], [6], [8], [10], [12], [13], and [14] which is a packaging member.

[18] A method for adjusting a haze value of an extruded product of a block copolymer composition comprising

block copolymer a comprising at least one polymer block mainly comprising a vinyl aromatic hydrocarbon monomer unit, and at least one polymer block mainly comprising a conjugated diene monomer unit, and copolymer b which is a random copolymer of a vinyl aromatic hydrocarbon monomer unit and a (meth)acrylic acid and/or (meth)acrylic acid alkyl ester monomer unit, the method comprising:

setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5;

setting a mass ratio between the vinyl aromatic hydrocarbon monomer unit and the (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10; and

adjusting a weight-average molecular weight and a half width of the copolymer (b) such that the copolymer b has a weight-average molecular weight (Mw) of 150,000 or larger and 250,000 or smaller as measured by a gel permeation chromatography measurement method, and a half width (ratio of a full width at a position of 50% of a peak height to a length from 1,000 to 1,000,000 on the logarithmic abscissa) of 30% or more in a molecular weight distribution curve.

[19] A method for adjusting a haze value of a molded product of a block copolymer composition comprising

block copolymer a comprising at least one polymer block mainly comprising a vinyl aromatic hydrocarbon monomer unit, and at least one polymer block mainly comprising a conjugated diene monomer unit, and copolymer b which is a random copolymer of a vinyl aromatic hydrocarbon monomer unit and a (meth)acrylic acid and/or (meth)acrylic acid alkyl ester monomer unit, the method comprising:

setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5;

setting a mass ratio between the vinyl aromatic hydrocarbon monomer unit and the (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10;

allowing the copolymer b to contain a copolymer (b-1) having a weight-average molecular weight (Mw) of 150,000 or larger and 350,000 or smaller as measured by a gel permeation chromatography measurement method and a copolymer (b-2) having a weight-average molecular weight (Mw) of 50,000 or larger and smaller than 150,000; and

setting a compositional ratio between the copolymer (b-1) and the copolymer (b-2) to copolymer (b-1)/copolymer (b-2) = 95/5 to 40/60.

Advantageous Effects of Invention

According to the present invention, a block copolymer composition and a molded product having excellent mechanical characteristics, molding processability, and transparency and favorable balance among these characteristics are obtained.

Description of Embodiments

Hereinafter, the mode for carrying out the present invention (hereinafter, referred to as the "present embodiment") will be described in detail.

The present embodiment given below is illustrative for describing the present invention and is not intended to limit the present invention to the contents described below. The present invention can be carried out through various changes or modifications made therein without departing from the spirit of the present invention.

[Block copolymer composition]

The block copolymer composition of the present embodiment contains block copolymer a and copolymer b.

A mass ratio between the block copolymer a and the copolymer b is block copolymer a/copolymer b = 20/80 to 75/25,

the block copolymer a is a block copolymer comprising at least one polymer block mainly comprising a vinyl aromatic hydrocarbon monomer unit, and at least one polymer block mainly comprising a conjugated diene monomer unit,

a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,

the copolymer b is a random copolymer of a vinyl aromatic hydrocarbon monomer unit and a (meth)acrylic acid and/or (meth)acrylic acid alkyl ester monomer unit,

a mass ratio between the vinyl aromatic hydrocarbon monomer unit and the above (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10,

the copolymer b has a weight-average molecular weight (Mw) of 150,000 or larger and 250,000 or smaller as measured by a gel permeation chromatography measurement method, and

a half width (ratio of a full width at a position of 50% of a peak height to a length from 1,000 to 1,000,000 on the logarithmic abscissa) of 30% or more in a molecular weight distribution curve, and

an outer haze value measured in accordance with ISO14782 is 4.0% or less.

The half width of the copolymer b is preferably 31% or more, more preferably 32% or more. The upper limit of the half width is not particularly limited and is basically 50% or less in consideration of economic industrial productivity.

The block copolymer composition of the present embodiment which has the configuration as described above can satisfy excellent impact resistance and rigidity, which are generally in a tradeoff relationship, at the same time and can further have favorable transparency and molding processability together.

The copolymer b is preferably a mixture of copolymers having at least two types of weight-average molecular weights, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000.

The compositional ratio between the copolymer (b-1) and the copolymer (b-2) is preferably copolymer (b-1)/copolymer (b-2) = 95/5 to 40/60, more preferably 90/10 to 50/50, further preferably 80/20 to 55/45.

The combined use of the copolymers (b-1) and (b-2) having different weight-average molecular weights facilitates controlling a half width in a molecular weight distribution curve. The half width can be easily set to 30% or more by appropriately selecting a plurality of copolymers b differing in molecular weight.

When the half width is 30% or more, the physical property balance among mechanical characteristics, transparency ascribable to decrease in viscosity, and reduced warpage is favorable.

It is difficult to achieve characteristics such as transparency and reduced warpage by merely adjusting a large or small molecular weight. Thus, such characteristics easily fall into a tradeoff relationship. The balance between transparency and reduced warpage can become favorable by controlling the half width to the range mentioned above.

By containing the copolymer (b-1) and the copolymer (b-2) differing in weight-average molecular weight, a molded product having high dimensional accuracy with warpage suppressed due to suppressed post-molding shrinkage can be obtained in the case of an injection-molded product, whereas a molded product excellent in transparency having no pearskin extrudate skin due to suppressed post-molding shrinkage can be obtained in the case of an extruded product such as a T die or profile extruded product, as in injection, without impairing mechanical characteristics such as impact strength and rigidity.

In the present specification, each monomer unit constituting a polymer is designated according to the designation of a monomer from which the monomer unit is derived.

For example, the "vinyl aromatic hydrocarbon monomer unit" means a constituent unit of a polymer resulting from the polymerization of a vinyl aromatic hydrocarbon monomer which is a monomer, and its structure is a molecular structure where two carbon atoms of a substituted ethylene group derived from a substituted vinyl group form a polymer backbone.

The "conjugated diene monomer unit" means a constituent unit of a polymer resulting from the polymerization of conjugated diene which is a monomer, and its structure is a molecular structure where two carbon atoms of olefin derived from the conjugated diene monomer form a polymer backbone.

The "(meth)acrylic acid alkyl ester monomer unit" means a constituent unit of a polymer resulting from the polymerization of a (meth)acrylic acid alkyl ester monomer which is a monomer, and its structure is a molecular structure where two carbon atoms of a substituted ethylene group derived from a substituted vinyl group form a polymer backbone.

In the present specification, the term "mainly comprising" means that the content of a predetermined monomer unit is 90% by mass or more.

For example, in the block copolymer a, the "polymer block mainly comprising a vinyl aromatic hydrocarbon monomer unit" refers to a block containing 90% by mass or more of the vinyl aromatic hydrocarbon monomer unit.

A polymer block containing less than 90% by mass of a vinyl aromatic monomer unit and more than 10% by mass of a conjugated diene monomer unit is defined as a random copolymer block.

Such a random copolymer block may have a completely random structure or a tapered structure (where the compositional ratio of the copolymer is gradually changed along with the chain).

(Mass ratio between block copolymer a and copolymer b)

In the block copolymer composition of the present embodiment, the mass ratio between the block copolymer a and the copolymer b is block copolymer a/copolymer b = 20/80 to 75/25.

When the mass ratio of the block copolymer a is 20% by mass or more with respect to 100% by mass in total of the block copolymer a and the copolymer b, a molded product of the block copolymer composition of the present embodiment, which is either an injection-molded product or an extruded product, exerts excellent impact strength. Furthermore, excellent folding strength is obtained when a molded product of the block copolymer composition of the present embodiment is a T die-extruded sheet.

On the other hand, when the mass ratio of the copolymer b is 25% by mass or more with respect to 100% by mass in total of the block copolymer a and the copolymer b, mechanical characteristics are largely improved. For example, extrusion molding produces a T die sheet or a profile extrudate having more favorable thickness accuracy. Thus, a packaging material for an electronic component, such as a carrier tape or a magazine tube, having favorable rigidity and buckling strength can be obtained.

The mass ratio between the block copolymer a and the copolymer b is preferably block copolymer a/copolymer b = 30/70 to 70/30, more preferably 35/65 to 65/35, further preferably 35/65 to 60/40.

Particularly, when the mass ratio of the block copolymer a is 35% by mass or more, a fold number measured in accordance with JIS P8115 tends to be dramatically improved.

(Block copolymer a)

The block copolymer a is a block copolymer of at least one polymer block mainly comprising a vinyl aromatic hydrocarbon monomer, and at least one polymer block mainly comprising a conjugated diene monomer.

In the block copolymer a, the content of the vinyl aromatic hydrocarbon monomer unit is 50% by mass or more and 95% by mass or less, and the content of the conjugated diene monomer unit is 5% by mass or more and 50% by mass or less, with respect to the total amount of the vinyl aromatic hydrocarbon monomer unit and the conjugated diene monomer unit.

The block copolymer a may optionally comprise an additional polymerizable monomer unit other than the vinyl aromatic monomer unit (unit derived from a vinyl aromatic monomer) and the conjugated diene monomer unit (unit derived from a conjugated diene monomer).

The vinyl aromatic monomer can have an aromatic ring and a vinyl group in the molecule. Examples thereof include, but are not limited to, styrene, o-methylstyrene, m-methylstyrene, p-methylstyrene, o-ethylstyrene, p-ethylstyrene, p-tert-butylstyrene, 2,4-dimethylstyrene, 1,3-dimethylstyrene, $\alpha$-methylstyrene, $\alpha$-methyl-p-methylstyrene, vinylnaphthalene, vinylanthracene, and 1,1-diphenylethylene.

One of these vinyl aromatic monomers is used singly, or two or more thereof are used in combination. Among them, styrene is preferred from the viewpoint of industry and economic performance.

The conjugated diene monomer can be diolefin having a pair of conjugated double bonds. Examples thereof include, but are not limited to, 1,3-butadiene, 2-methyl-1,3-butadiene (isoprene), 2,3-dimethyl-1,3-butadiene, 1,3-pentadiene, and 1,3-hexadiene.

One of these conjugated diene monomers is used singly, or two or more thereof are used in combination.

Among them, 1,3-butadiene or isoprene is preferred from the viewpoint of industry and economic performance.

The mass ratio between the vinyl aromatic monomer unit and the conjugated diene monomer unit in the block copolymer a is vinyl aromatic monomer unit/conjugated diene monomer unit = 50/50 to 95/5.

When the mass ratio falls within the above range, a molded product (e.g., a styrene-type resin sheet) having high transparency tends to be obtained.

From a similar viewpoint, the mass ratio is preferably 55/45 to 90/10, more preferably 60/40 to 85/15, further preferably 65/35 to 80/20, still more preferably 67/33 to 78/22.

The contents of the vinyl aromatic monomer unit and the conjugated diene monomer unit can be quantitatively determined by a method described in Examples mentioned later.

The contents of these monomer units can be controlled by adjusting the ratios and the amounts of their respective monomers added in a polymerization step for the block copolymer a.

Examples of the block copolymer a include, but are not particularly limited to, block copolymers having block structures represented by the following general formulas (1) to (8):

$$S1-B1 \ ... \ (1),$$

$$S1-B/S1 \ ... \ (2),$$

$$S1-B1-S2 \ ... \ (3),$$

$$S1-B/S1-S2 \ ... \ (4),$$

$$S1-B1-S2-B2 \ ... \ (5),$$

$$S1-B/S1-S2-B/S2 \ ... \ (6),$$

$$S1-B/S1-B/S2-S2 \ ... \ (7), \ and$$

and

$$S1-B1-S2-B2-S3 \ ... \ (8).$$

In the general formulas (1) to (8), S1, S2, and S3 each represent a polymer block (S) mainly comprising a vinyl aromatic monomer unit, B, B1, and B2 each represent a polymer block (B) mainly comprising a conjugated diene monomer unit, and B/S1 and B/S2 each represent a random copolymer block (B/S) in which each of the contents of the vinyl aromatic monomer unit and the conjugated diene copolymer unit is less than 90% by mass.

In the general formulas (1) to (8), the numbers attached to S, B, and B/S are numbers for identifying the polymer block (S), the polymer block (B), and the random copolymer block (B/S), respectively. Different numbers mean that the respective molecular weights (degrees of polymerization) or copolymerization ratios of the blocks may be the same or different.

Each of the polymer block (S) and the polymer block (B) may be formed from a continuous structure where componentially or compositionally different blocks continue. For example, the polymer block (B) may be B1-B2-B3 (wherein B1, B2, and B3 are B blocks differing in composition or component from each other). The chain structure of the random copolymer block (B/S) may be a random block or a tapered block (where the compositional ratio is gradually changed along with the chain).

The block copolymer a may be a linear polymer or a branched polymer.

Examples of the method for obtaining the branched polymer include a method of subjecting polymer ends to coupling reaction, and a method of forming branches at the initial stage of polymerization using a polyfunctional initiator.

The block copolymer a is preferably a block copolymer having at least two or more polymer blocks each mainly comprising a vinyl aromatic hydrocarbon monomer unit, from the viewpoint of the mechanical characteristics, such as folding strength, of a molded product of the block copolymer composition of the present embodiment.

In the present specification, the "polymer block mainly comprising a vinyl aromatic monomer unit" is also referred to as "polymer block S".

(Peak molecular weight and molecular weight distribution of block copolymer a)

In the block copolymer composition of the present embodiment, at least one peak molecular weight derived from the block copolymer a is preferably present within a molecular weight range of 30,000 or larger and 300,000 or smaller in a molecular weight distribution curve measured by a gel permeation chromatography measurement method (GPC measurement method).

As a result, the molding processability of the block copolymer composition tends to be more favorable while the mechanical characteristics of its molded product tend to be more favorable.

From a similar viewpoint, the peak molecular weight derived from the block copolymer a is more preferably present within a range of 40,000 or larger and 250,000 or smaller, further preferably within a range of 50,000 or larger and 210,000 or smaller. The peak molecular weight of the block copolymer a can be measured by a method described in Examples mentioned later.

(Molecular weight distribution (Mw/Mn) of block copolymer a)

The molecular weight distribution (Mw/Mn) of the block copolymer a is not particularly limited. Block copolymer a having a combination of different molecular weights is obtained by associating polymerization active ends of some polymers using a coupling agent or the like mentioned later.

Furthermore, the polymerization of some polymers may be terminated by rendering the amount (molar number) of an alcohol such as ethanol added smaller than that of a polymerization initiator added during the course of polymerization. As a result, the block copolymer a can be obtained as a mixture of different molecular weights. The molecular weight distribution (Mw/Mn) of the block copolymer a can be measured by a method described in Examples mentioned later.

(Number-average molecular weight (Mn) of polymer block S)

The number-average molecular weight (Mn) of the polymer block S mainly comprising a vinyl aromatic hydrocarbon monomer unit in the block copolymer a is preferably 10,000 to 60,000, more preferably 15,000 to 50,000, further preferably 20,000 to 40,000.

When the number-average molecular weight (Mn) of the polymer block S falls within the above range, a molded product, for example, a styrene-type resin sheet, having much better mechanical characteristics and favorable molding appearance with good balance can be obtained.

The number-average molecular weight (Mn) of the polymer block S in the block copolymer a can be controlled by adjusting the amount of the vinyl aromatic monomer supplied (fed) to a polymerization initiator.

When the block copolymer a has two or more polymer blocks S, the molecular weights of these two or more polymer blocks S can be controlled each individually.

The number-average molecular weight (Mn) of the polymer block S is regarded as the number-average molecular weight of all the polymer blocks S combined in the block copolymer a. For example, in the case of block copolymer a having an S1-B/S1-S2 structure, the average molecular weight of the polymer blocks S is the number-average molecular weight of S1 and S2 combined.

The number-average molecular weight of the polymer block S in the block copolymer a can be obtained by measuring, by use of gel permeation chromatography (GPC), polymer block S components (except for vinyl aromatic monomer polymer components having an average degree of polymerization of approximately 30 or less) obtained by a method of oxidatively degrading a block copolymer using tertiary butyl hydroperoxide with osmium tetroxide as a catalyst (method described in I.M. KOLTHOFF, et al., J. Polym. Sci. 1, 429 (1946)). Specifically, the number-average molecular weight of the polymer block S can be measured by a method described in Examples.

(Molecular weight distribution (Mw/Mn) of polymer block S)

The molecular weight distribution (Mw/Mn) of the polymer block S mainly comprising a vinyl aromatic hydrocarbon monomer unit in the block copolymer a is preferably 1.5 to 4.0, more preferably 1.6 to 3.6, further preferably 1.7 to 3.2.

When the molecular weight distribution (Mw/Mn) of the polymer block (S) falls within the above range, the balance between molding processability and the dispersibility of the block copolymer a and the copolymer b tends to be more favorable so that a molded product having favorable molding appearance with no flow mark is obtained.

The molecular weight distribution (Mw/Mn) of the polymer block S in the block copolymer a can be controlled by adjusting the amount of the vinyl aromatic monomer supplied (fed) to a polymerization initiator.

In the present embodiment, when the block copolymer a has two or more polymer blocks S, the molecular weight distributions of these polymer blocks S can be controlled each individually. The molecular weight distribution (Mw/Mn) of the polymer block S is regarded as the average molecular weight distribution of the whole of all the polymer blocks S combined in the block copolymer a. For example, in the case of block copolymer a having an S1-B/S1-S2 structure, the average molecular weight of the polymer blocks S is the average molecular weight distribution of S1 and S2.

Another example of the method for controlling the molecular weight distribution (Mw/Mn) of the polymer block S in the block copolymer a includes a method of terminating the polymerization of some polymers by the addition of an alcohol such as ethanol at a smaller molar number than that of a polymerization initiator during a polymerization step for the polymer block S. As a result, the polymer block S has two peak molecular weights. Thus, the molecular weight distribution of the polymer block S can also be controlled by obtaining block copolymer a having polymer block S having two or more different chain length distributions.

Specifically, the molecular weight distribution of the polymer block S in the block copolymer a can be determined by a method described in Examples mentioned later.

(Method for producing block copolymer a)

The method for producing the block copolymer a constituting the block copolymer composition of the present embodiment can utilize a technique known in the art. Typical examples of the production method include a method of block-copolymerizing a conjugated diene monomer and a vinyl aromatic monomer using an anionic initiator such as an organolithium compound in a hydrocarbon solvent. The block copolymer a can be produced by a method described in, for example, Japanese Patent Publication No. 36-19286, 43-17979, 48-2423, 49-36957, 57-49567, or 58-11446.

The block copolymer a is obtained by copolymerizing a vinyl aromatic monomer and a conjugated diene monomer in a hydrocarbon solvent.

A conventional hydrocarbon solvent known in the art can be used as the hydrocarbon solvent for use in the production of the block copolymer a. Examples thereof include, but are not limited to: aliphatic hydrocarbons such as n-butane, isobutane, n-pentane, n-hexane, n-heptane, and n-octane; alicyclic hydrocarbons such as cyclopentane, methylcyclopentane, cyclohexane, methylcyclohexane, cycloheptane, and methylcycloheptane; and aromatic monomers such as benzene, toluene, xylene, and ethylbenzene.

One of these hydrocarbon solvents is used singly, or two or more thereof are used in combination. Among them, n-hexane or cyclohexane is used generally and preferably in the case of using an organolithium initiator.

Examples of the polymerization initiator include, but are not particularly limited to, polymerization initiators that exhibit anionic polymerization activity against the conjugated diene monomer and the vinyl aromatic monomer, and specifically include alkali metal compounds such as aliphatic hydrocarbon alkali metal compounds, aromatic monomer alkali metal compounds, and organic amino alkali metal compounds.

Examples of the alkali metal in the alkali metal compound include, but are not particularly limited to, lithium, sodium, and potassium.

Preferred examples of the alkali metal compound include, but are not limited to, aliphatic and aromatic hydrocarbon lithium compounds each having 1 to 20 carbon atoms, which are compounds containing one lithium atom per molecule, and dilithium compounds, trilithium compounds, and tetralithium compounds containing a plurality of lithium atoms per molecule.

Examples of such an alkali metal compound include, but are not limited to, n-propyllithium, n-butyllithium, sec-butyllithium, tert-butyllithium, hexamethylene dilithium, butadienyl dilithium, isoprenyl dilithium, reaction products of diisopropenylbenzene and sec-butyllithium, and reaction products of divinylbenzene, sec-butyllithium, and a small amount of 1,3-butadiene.

For example, an organic alkali metal compound disclosed in a foreign patent including U.S. Patent No. 5708092, British Patent No. 2241239, or U.S. Patent No. 5527753 can also be used as the alkali metal compound.

One of these compounds is used singly, or two or more thereof are used in combination. Among them, n-butyllithium is preferred.

The process of producing the block copolymer a is not particularly limited and may have, for example, the step of additionally adding a polymerization initiator during the course of polymerization, or the step of adding an alcohol, water, or the like less than a polymerization active site during the course of polymerization, and then continuing the polymerization by the supply of the monomers again. Block copolymer a containing a plurality of components differing in molecular weight from each other can be prepared by appropriately selecting such a step.

In the process of producing the block copolymer a, the content of the vinyl aromatic hydrocarbon monomer unit and the content of the conjugated diene monomer unit in the finally obtained block copolymer a can be controlled by adjusting the charging ratio between the vinyl aromatic monomer and the conjugated diene monomer which are polymerization raw materials.

Examples of the method for preparing a copolymer block of the vinyl aromatic monomer unit and the conjugated diene monomer unit include a method of continuously supplying a mixture of a vinyl aromatic monomer and a conjugated diene monomer to a polymerization system for polymerization, and a method of copolymerizing a vinyl aromatic monomer and a conjugated diene monomer using a polar compound or a randomizing agent.

Examples of the polar compound and the randomizing agent include, but are not limited to: ethers such as tetrahydrofuran, diethylene glycol dimethyl ether, and diethylene glycol dibutyl ether; amines such as triethylamine and tetramethylethylenediamine; thioethers; phosphines; phosphoramides; alkylbenzenesulfonate; and alkoxides of potassium or sodium.

The polymerization temperature in the polymerization step for the block copolymer a is in the range of generally -10°C to 150°C, preferably 40°C to 120°C, in the case of anionic polymerization using a polymerization initiator.

The time required for polymerization differs depending on conditions and is usually within 48 hours, preferably in the range of 1 hour to 10 hours.

The atmosphere of the polymerization system is preferably purged with, for example, an inert gas such as nitrogen gas.

The polymerization pressure is not particularly limited as long as the polymerization can be performed in a pressure range sufficient for maintaining the monomers and the polymerization solvent in a liquid layer within the above polymerization temperature range.

It is preferred to make a point to prevent the polymerization system from being unintentionally contaminated with impurities that inactivate a polymerization initiator and a living polymer, for example, water, oxygen, or carbon dioxide.

When the block copolymer a contains a random copolymer block, a method can be adopted, such as a method of continuously supplying a mixture of a vinyl aromatic hydrocarbon monomer and a conjugated diene monomer to a polymerization system for polymerization, and/or a method of copolymerizing a vinyl aromatic monomer and a conjugated diene monomer using a polar compound or a randomizing agent.

In the case of using an organic alkali metal as a polymerization initiator in the production of the block copolymer a which is a constituent of the block copolymer composition of the present embodiment, coupling reaction that is terminated by the binding of two or more molecules can be suitably used in terminating polymerization reaction. The coupling reaction can be performed by adding a coupling agent listed below into the polymerization system. Only some polymers in the polymerization system may be coupled by adjusting the amount of the coupling agent added, and uncoupled polymers and coupled polymers can be allowed to coexist to produce block copolymer a having two or more peaks in a molecular weight distribution.

Examples of the coupling agent that can be suitably used in the production of the block polymer a constituting the block copolymer composition of the present embodiment include, but are not particularly limited to, bifunctional or higher arbitrary coupling agents.

Specific examples thereof include silane compounds containing an amino group, such as tetraglycidyl m-xylenediamine, tetraglycidyl-1,3-bisaminomethylcyclohexane, tetraglycidyl-p-phenylenediamine, tetraglycidyl diaminodiphenylmethane, diglycidyl aniline, diglycidyl o-toluidine, γ-glycidoxyethyltrimethoxysilane, γ-glycidoxypropyltrimethoxysilane, γ-glycidoxybutyltrimethoxysilane, γ-glycidoxypropyltriethoxysilane, γ-glycidoxypropyltripropoxysilane, and γ-glycidoxypropyltributoxysilane.

Other examples of the coupling agent include silane compounds containing a silyl group, such as 1-[3-(triethoxysilyl)-propyl]-4-methylpiperazine, 1-[3-(diethoxyethylsilyl)-propyl]-4-methylpiperazine, 1-[3-(trimethoxysilyl)-propyl]-3-methylimidazolidine, 1-[3-(diethoxyethylsilyl)-propyl]-3-ethylimidazolidine, 1-[3-(triethoxysilyl)-propyl]-3-methylhexahydropyrimidine, 1-[3-(dimethoxymethylsilyl)-propyl]-3-methylhexahydropyrimidine, 3-[3-(tributoxysilyl)-propyl]-1-methyl-1,2,3,4-tetrahydropyrimidine, 3-[3-(dimethoxymethylsilyl)-propyl]-1-ethyl-1,2,3,4-tetrahydropyrimidine, 1-(2-ethoxyethyl)-3-[3-(trimethoxysilyl)-propyl]-imidazolidine, and (2-{3-[3-(trimethoxysilyl)-propyl]-tetrahydropyrimidin-1-yl}-ethyl)dimethylamine.

Other examples of the coupling agent include silane compounds containing a glycidoxy group, such as γ-glycidoxypropyltriphenoxysilane, γ-glycidoxypropylmethyldimethoxysilane, γ-glycidoxypropylethyldimethoxysilane, γ-glycidoxypropylethyldiethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropyldimethylmethoxysilane, γ-glycidoxypropyldiethylethoxysilane, γ-glycidoxypropyldimethylethoxysilane, γ-glycidoxypropyldimethylphenoxysilane γ-glycidoxypropyldiethylmethoxysilane, γ-glycidoxypropylmethyldiisopropenoxysilane, bis(y-glycidoxypropyl)dimethoxysilane, bis(y-glycidoxypropyl)diethoxysilane, bis(y-glycidoxypropyl)dipropoxysilane, bis(y-glycidoxypropyl)dibutoxysilane, bis(y-glycidoxypropyl)diphenoxysilane, bis(y-glycidoxypropyl)methylmethoxysilane, bis(y-glycidoxypropyl)methylethoxysilane, bis(y-glycidoxypropyl)methylpropoxysilane, bis(y-glycidoxypropyl)methylbutoxysilane, bis(y-glycidoxypropyl)methylphenoxysilane tris(y-glycidoxypropyl)methoxysilane.

Other examples of the coupling agent include silane compounds containing a methacryloxy group, such as γ-methacryloxypropyltrimethoxysilane, γ-methacryloxypropyltriethoxysilane, γ-methacryloxymethyltrimethoxysilane, γ-methacryloxyethyltriethoxysilane, bis(y-methacryloxypropyl)dimethoxysilane, and tris(y-methacryloxypropyl)methoxysilane.

Other examples of the coupling agent include silane compounds containing an epoxycyclohexyl group, such as β-(3,4-epoxycyclohexyl)ethyl-trimethoxysilane, β-(3,4-epoxycyclohexyl)ethyl-triethoxysilane, β-(3,4-epoxycyclohexyl)ethyl-tripropoxysilane, β-(3,4-epoxycyclohexyl)ethyl-tributoxysilane, β-(3,4-epoxycyclohexyl)ethyl-triphenoxysilane β-(3,4-epoxycyclohexyl)propyl-trimethoxysilane, β-(3,4-epoxycyclohexyl)ethyl-methyldimethoxysilane, β-(3,4-epoxycyclohexyl)ethyl-ethyldimethoxysilane, β-(3,4-epoxycyclohexyl)ethyl-ethyldiethoxysilane, β-(3,4-epoxycyclohexyl)ethyl-methyldiethoxysilane, β-(3,4-epoxycyclohexyl)ethyl-methyldipropoxysilane, β-(3,4-epoxycyclohexyl)ethyl-methyldibutoxysilane, β-(3,4-epoxycyclohexyl)ethyl-methyldiphenoxysilane, β-(3,4-epoxycyclohexyl)ethyl-dimethylmethoxysilane, β-(3,4-epoxycyclohexyl)ethyl-diethylethoxysilane β-(3,4-epoxycyclohexyl)ethyl-dimethylethoxysilane, β-(3,4-epoxycyclohexyl)ethyl-dimethylpropoxysilane, β-(3,4-epoxycyclohexyl)ethyl-dimethylbutoxysilane, β-(3,4-epoxycyclohexyl)ethyl-dimethylphenoxysilane, β-(3,4-epoxycyclohexyl)ethyl-diethylmethoxysilane, and β-(3,4-epoxycyclohexyl)ethyl-methyldiisopropenoxysilane. Other examples of the coupling agent include 1,3-dimethyl-2-imidazolidinone, 1,3-diethyl-2-imidazolidinone, N,N'-dimethylpropyleneurea, and N-methylpyrrolidone.

In the case of addition-reacting the coupling agent with the living end of the block copolymer a, the living end of the block copolymer a is not limited by its structure by any means and is preferably the living end of a block mainly comprising a vinyl aromatic hydrocarbon monomer, from the viewpoint of the mechanical strength of the block copolymer composition of the present embodiment.

The amount of the coupling agent used is preferably 0.1 equivalents or more and 10 equivalents or less, more preferably 0.5 equivalents or more and 4 equivalents or less, with respect to 1 equivalent of the living end of the block copolymer a. One of these coupling agents is used singly, or two or more thereof are used in combination.

(Copolymer b)

The copolymer b is a random copolymer of a vinyl aromatic hydrocarbon monomer unit (unit derived from a vinyl aromatic hydrocarbon monomer) and a (meth)acrylic acid and/or (meth)acrylic acid alkyl ester monomer unit (unit derived from a (meth)acrylic acid and/or (meth)acrylic acid alkyl ester monomer). The copolymer b may optionally comprise an additional polymerizable monomer unit other than the vinyl aromatic hydrocarbon monomer unit and the (meth)acrylic acid and/or (meth)acrylic acid alkyl ester monomer unit.

The vinyl aromatic hydrocarbon monomer can have an aromatic ring and a vinyl group in the molecule. Examples thereof include, but are not particularly limited to, styrene, o-methylstyrene, m-methylstyrene, p-methylstyrene, o-ethylstyrene, p-ethylstyrene, p-tert-butylstyrene, 2,4-dimethylstyrene, 1,3-dimethylstyrene, α-methylstyrene, α-methyl-p-methylstyrene, vinylnaphthalene, vinylanthracene, and 1,1-diphenylethylene.

One of these vinyl aromatic hydrocarbon monomers is used singly, or two or more thereof are used in combination.

Among them, styrene is preferred from the viewpoint of industry and economic performance.

The (meth)acrylic acid and/or (meth)acrylic acid ester monomer means one or more monomers selected from the group consisting of acrylic acid, methacrylic acid, acrylic acid alkyl ester, and methacrylic acid alkyl ester.

The alkyl ester can be one or more ester compounds of an alkyl alcohol having 1 to 8 carbon atoms (C1 to C8) and acrylic acid and/or methacrylic acid.

Examples of the (meth)acrylic acid and/or (meth)acrylic acid ester monomer include acrylic acid, methacrylic

acid, acrylic acid $C_{1-6}$ alkyl ester such as methyl acrylate, ethyl acrylate, isopropyl acrylate, n-butyl acrylate (butyl acrylate), n-pentyl acrylate, and n-hexyl acrylate, acrylic acid cycloalkyl ester such as cyclohexyl acrylate, methacrylic acid $C_{1-6}$ alkyl ester such as methyl methacrylate, ethyl methacrylate, isopropyl methacrylate, n-butyl methacrylate, n-pentyl methacrylate, and n-hexyl methacrylate, and methacrylic acid cyclohexyl ester such as cyclohexyl methacrylate. Among them, acrylic acid $C_{1-6}$ alkyl ester or methacrylic acid $C_{1-6}$ alkyl ester is preferred, acrylic acid $C_{1-4}$ alkyl ester or methacrylic acid $C_{1-4}$ alkyl ester is more preferred, methyl acrylate and/or methyl methacrylate is further preferred, and methyl methacrylate is still more preferred, from the viewpoint that the softening temperature of the copolymer b can be further elevated and as a result, the moldability and heat distortion resistance of the resulting molded product can be further improved.

In the present specification, the "random copolymer of a vinyl aromatic hydrocarbon monomer unit and a (meth)acrylic acid and/or (meth)acrylic acid alkyl ester monomer unit" also includes a copolymer comprising the vinyl aromatic hydrocarbon monomer unit, the (meth)acrylic acid and/or (meth)acrylic acid alkyl ester monomer unit, and a small amount of an additional monomer unit that is other than these monomer units and is polymerizable with these monomer units.

The amount of the additional monomer unit is preferably 2% by mass or less in the copolymer b.

Even a "random copolymer of a vinyl aromatic hydrocarbon monomer unit and methyl methacrylate" including the monomer units listed in the particularly preferred copolymer may contain 2% by mass or less of the additional monomer unit.

The mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10, preferably 60/40 to 90/10, more preferably 70/30 to 85/15.

When the mass ratio falls within the above range, a block copolymer composition low in moisture absorbency and excellent in mechanical characteristics is obtained.

On the other hand, if the content of the vinyl aromatic hydrocarbon monomer unit is less than 50% by mass, pre-drying before molding is necessary due to strong moisture absorbency. In addition, the compatibility of the copolymer b with the block copolymer a is reduced, resulting reduced mechanical characteristics of the block copolymer composition.

If the content of the vinyl aromatic hydrocarbon monomer unit exceeds 90% by mass, mechanical characteristics (particularly, folding strength) are reduced.

The copolymer b can be produced by polymerization according to a method known in the art.

The copolymer b can be produced using a polymerization method known in the art, for example, bulk polymerization, solution polymerization, emulsion polymerization, or suspension polymerization.

An industrially general production method involves radical-polymerizing a vinyl aromatic hydrocarbon monomer and (meth)acrylic acid and/or (meth)acrylic acid ester coexisting with each other.

In the method for producing the copolymer b, a polymerization initiator such as organic peroxide may be used, or heat polymerization may be performed without the use of a polymerization initiator.

A polymerization solvent or a chain transfer agent such as aliphatic mercaptan can be used, if necessary, from the viewpoint of the control of polymerization reaction.

The polymerization solvent is used for keeping s viscosity low in the reaction system in a continuous polymerization process. Examples of the organic solvent include, but are not limited to, alkylbenzenes such as benzene, toluene, ethylbenzene and xylene, ketones such as acetone and methyl ethyl ketone, and aliphatic hydrocarbons such as hexane and cyclohexane.

Particularly, for example, in the case of using a polyfunctional vinyl aromatic hydrocarbon monomer as a monomer, the polymerization solvent is preferably used from the viewpoint of suppressing gelation.

Use of the polymerization solvent rarely forms a gel, permits a high level of control in the polymerization step, and further facilitates obtaining copolymer b having the desired composition and physical properties.

The amount of the polymerization solvent used is not particularly limited and is usually preferably 1 to 50% by mass, more preferably 5 to 25% by mass, with respect to the whole composition in a polymerization reactor from the viewpoint of suppressing gelation.

When the amount of the polymerization solvent used is 50% by mass or less, copolymer b excellent in easy suppression of gelation and control in a polymerization step, and productivity tends to be able to be obtained.

In the polymerization step for the copolymer b, a radical agent such as organic peroxide can be preferably used.

Examples of the radical agent include, but are not limited to: peroxyketals such as 1,1-di(t-butylperoxy)cyclohexane, 2,2-di(t-butylperoxy)butane, 2,2-di(4,4-di-t-butylperoxycyclohexyl)propane, and 1,1-di(t-amylperoxy)cyclohexane; hydroperoxides such as cumene hydroperoxide and t-butyl hydroperoxide; alkyl peroxides such as t-butyl peroxyacetate and t-amyl peroxyisononanoate; dialkyl peroxides such as t-butylcumyl peroxide, di-t-butylperoxide, dicumyl peroxide, and di-t-hexyl peroxide; peroxyesters such as t-butyl peroxyacetate, t-butyl peroxybenzoate, and t-butyl peroxyisopropylmonocarbonate; peroxycarbonates such as t-butyl peroxyisopropylcarbonate and polyether tetrakis(t-butyl peroxycarbonate); and N,N'-azobis(cyclohexane-1-carbonitrile), N,N'-azobis(2-methylbutyronitrile), N,N'-azobis(2,4-dimethylvaleronitrile), and N,N'-azobis[2-(hydroxymethyl)propionitrile].

One of these radical agents is used singly, or two or more thereof are used in combination.

In the polymerization step for the copolymer b, a chain transfer agent can be further used for the purpose of adjusting the molecular weight distribution or half width of the copolymer b.

Examples of the chain transfer agent include, but are not limited to, aliphatic mercaptan, aromatic mercaptan, pentaphenylethane, $\alpha$-methylstyrene dimers and terpinolene.

The copolymer b constituting the block copolymer composition of the present embodiment has a weight-average molecular weight (Mw) of 150,000 or larger and 250,000 or smaller as measured by a gel permeation chromatography measurement method, and a half width (ratio of a full width at a position of 50% of a peak height to a length from 1,000 to 1,000,000 on the logarithmic abscissa) of 30% or more in a molecular weight distribution curve.

The possessed weight-average molecular weight and half width mentioned above exert excellent mechanical characteristics such as impact strength and fold number, and contribute to reduction in warpage for an injection-molded product and improvement in transparency for an extruded product.

Depending on production conditions, the half width stipulated in the molecular weight distribution curve of the copolymer b may be controlled to the above numeric range by using the chain transfer agent mentioned above or using organic peroxide having a polyfunctional group. The half width can be controlled to the above numeric range by combined use of two or more copolymers b differing in weight-average molecular weight, and can be relatively easily controlled to 30% or more.

Specifically, the half width in the molecular weight distribution curve can be set to 30% or more by using a mixture of a copolymer (b-1) having a weight-average molecular weight (Mw) of 150,000 or larger and 350,000 or smaller, and a copolymer (b-2) having a weight-average molecular weight (Mw) of 50,000 or larger and smaller than 150,000 as the copolymer b.

If the weight-average molecular weight of the copolymer b is larger than 250,000 and 350,000 or smaller or if this weight-average molecular weight is 150,000 or larger and 250,000 or smaller and the stipulated half width mentioned above is less than 30%, the respective dispersion morphologies of the block copolymer a and the copolymer b have a co-continuous structure, which generates warpage due to post-molding shrinkage in the case of an injection-molded product. On the other hand, an extruded product such as a T die or profile extruded product has pearskin extrudate skin by the influence of post-molding shrinkage, resulting in elevated outer haze, albeit with favorable inner haze, and impaired transparency.

If the weight-average molecular weight of the copolymer b is smaller than 150,000, the surface skin of a T die or profile extruded product is excellent in smoothness and an excellent transparent sheet having a low outer haze can be obtained. However, such an extruded product is insufficient because the extruded product has insufficient fold number or impact strength and cannot satisfy practically minimum mechanical characteristics as a transparent packaging material such as an electronic component packaging material. The resulting molded product has insufficient impact strength, though warpage as an injection-molded product can be overcome.

Accordingly, the copolymer b constituting the block copolymer composition of the present embodiment has a weight-average molecular weight of 150,000 or larger and 250,000 or smaller and a stipulated half width of 30% or more. This permits a high level of balance between mechanical characteristics and transparency.

The method for controlling the half width of the copolymer b is not limited by any means. Preferably, the half width of interest can be achieved by preferably using the copolymers differing in weight-average molecular weight, i.e., the copolymer (b-1) having Mw of 150,000 or larger and 350,000 or smaller and the copolymer (b-2) having Mw of 50,000 or larger and smaller than 150,000, in combination, as mentioned above.

Although the preferred ratio between the copolymer (b-1) and the copolymer (b-2) used in combination depends on the selected weight-average molecular weights, the ratio is, for example, preferably in the range of copolymer (b-1)/copolymer (b-2) = 95/5 to 40/60, more preferably in the range of 90/10 to 50/50, further preferably in the range of 85/15 to 50/50, still more preferably in the range of 85/15 to 60/40, still further preferably in the range of 80/20 to 60/40, particularly preferably in the range of 80/20 to 65/35.

The half width can be increased by using a mixture of the component (b-1) and the component (b-2) as the copolymer b, selecting their appropriate weight-average molecular weights, and setting the ratio therebetween to the above range. As a result, a high level of good balance between transparency and mechanical characteristics such as fold number and impact strength can be attained.

The molecular weight of the copolymer b can be controlled by adjusting monomer concentrations, the amount of a radical agent such as organic peroxide, the presence or absence or amount of a chain transfer agent, etc.

In general, the molecular weight is increased by decreasing the amount of the radical agent without the use of the chain transfer agent, and decreased by increasing the amount of the radical agent and adding the chain transfer agent or increasing the amount thereof.

The copolymer b is preferably a copolymer of a styrene monomer unit and an acrylic acid $C_{1-4}$ alkyl ester

monomer unit and/or a methacrylic acid $C_{1-4}$ alkyl ester monomer unit (e.g., a styrene-methyl methacrylate copolymer (MS resin) and a styrene-methyl acrylate-methyl methacrylate copolymer) from the viewpoint that the softening temperature of the copolymer b can be further elevated and as a result, the moldability and heat distortion resistance of the resulting molded product can be further improved.

In the case of using a styrene-butyl acrylate copolymer as the high-molecular-weight component (b-1) constituting the copolymer b, the resulting block copolymer composition obtained by mixing the copolymer b with the block copolymer a exerts favorable transparency in a molded product even if only the high-molecular-weight component serving as the component (b-1) having a weight-average molecular weight in the range of 150,000 to 350,000 is used without the combined use of the low-molecular-weight component (b-2). Examples thereof include SC004 launched from PS Japan Corp. However, a blend with SC004 has been found to drastically reduce heat resistance (Vicat softening temperature), though exerting excellent transparency. Such a blend can be used in food packaging for use at ordinary temperature or lower without heating and however, is limited by its purpose because the blend is not suitable for electronic component packaging materials required to have heat distortion resistance.

(Characteristics of block copolymer composition)

<Haze value>

The block copolymer composition of the present embodiment has an outer haze value of 4.0% or less measured in accordance with ISO14782. As a result, excellent transparency can be achieved.
The outer haze value can be measured by a method described in Examples mentioned later.
The haze value of the block copolymer composition can be controlled to the above numeric range by adjusting the weight-average molecular weight and half width of the copolymer b.

<Vicat softening temperature>

The Vicat softening temperature of the block copolymer composition of the present embodiment is preferably 80°C or higher, more preferably 90°C or higher.
The block copolymer composition having the Vicat softening temperature has high heat distortion resistance and can be suitably used as a material for electronic component packaging materials.
For setting the Vicat softening temperature to the above numeric range, it is preferred to use a styrene-methyl methacrylate copolymer (MS resin) as the copolymer b.
A commercially available product may be used as the MS resin. Examples thereof include "TOYO MS", a product from Toyo Styrene Co., Ltd.

(Other additives that may be blended into block copolymer composition)

The block copolymer composition of the present embodiment may contain an arbitrary additive without inhibiting the working effects of the present invention.
Examples of the additive include those generally used for the blending of resins or rubber-like polymers. Examples thereof include, but are not limited to, inorganic fillers such as calcium carbonate, magnesium carbonate, and silica, lubricants and mold release agents such as fatty acid (e.g., stearic acid and behenic acid), fatty acid metal salt (e.g., zinc stearate, calcium stearate, and magnesium stearate), and fatty acid amide (e.g., ethylene bisstearamide), softening agents and plasticizers such as paraffin oil, process oil, organopolysiloxane, and mineral oil, hindered phenol-type and phosphorus-type heat stabilizers and antioxidants, hindered amine-type light stabilizers, benzotriazole-type ultraviolet absorbers, flame retardants, antistatic agents, reinforcing agents such as organic fibers, glass fibers, carbon fibers, and metal whiskers, and colorants such as organic pigments, inorganic pigments, and organic dyes.

[Molded product and method for producing same]

The molded product of the present embodiment is a molded product of the block copolymer composition of the present embodiment containing block copolymer a and copolymer b, and is obtained by mixing the block copolymer a and the copolymer b constituting the block copolymer composition of the present embodiment mentioned above to obtain a mixture, and molding the mixture.
The mass ratio between the block copolymer a and the copolymer b is block copolymer a/copolymer b = 20/80 to 75/25.
The block copolymer a and the copolymer b are the same as described in the section [Block copolymer composition] mentioned above.

Specifically, the block copolymer a is a block copolymer comprising at least one polymer block mainly comprising a vinyl aromatic hydrocarbon monomer unit, and at least one polymer block mainly comprising a conjugated diene monomer unit, and the mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5.

The copolymer b is a random copolymer of a vinyl aromatic hydrocarbon monomer unit and a (meth)acrylic acid and/or (meth)acrylic acid alkyl ester monomer unit, and the mass ratio between the vinyl aromatic hydrocarbon monomer unit and the above (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10.

The copolymer b has weight-average molecular weight Mw of 150,000 or larger and 250,000 or smaller and a half width (ratio of a width at a position of 50% of a peak height to a length from 1,000 to 1,000,000 on the logarithmic abscissa) of 30% or more in a molecular weight distribution curve. In a preferred embodiment, the copolymer b is a mixture of copolymers having at least two types of weight-average molecular weights, a copolymer (b-1) having a weight-average molecular weight (Mw) of 150,000 or larger and 350,000 or smaller and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60.

The molded product of the present embodiment has an outer haze value of 4.0% or less measured in accordance with ISO14782.

The block copolymer a is preferably a block copolymer having at least two or more polymer blocks each mainly comprising a vinyl aromatic hydrocarbon monomer unit, from the viewpoint of the mechanical characteristics, such as folding strength, of the molded product of the present embodiment.

(Peak molecular weight and molecular weight distribution of block copolymer a)

In the molded product of the present embodiment, at least one peak molecular weight derived from the block copolymer a is preferably present within a molecular weight range of 30,000 or larger and 300,000 or smaller in a molecular weight distribution curve measured by a gel permeation chromatography measurement method (GPC measurement method) of the block copolymer composition of the present embodiment used to obtain the molded product.

As a result, molding processability tends to be more favorable while the mechanical characteristics of the molded product tend to be more favorable.

From a similar viewpoint, the peak molecular weight derived from the block copolymer a is more preferably present within a range of 40,000 or larger and 250,000 or smaller, further preferably within a range of 50,000 or larger and 210,000 or smaller. The peak molecular weight of the block copolymer a can be measured by a method described in Examples mentioned later.

(Number-average molecular weight (Mn) of polymer block S)

The number-average molecular weight (Mn) of the polymer block S mainly comprising a vinyl aromatic hydrocarbon monomer unit in the block copolymer a is preferably 10,000 to 60,000, more preferably 15,000 to 50,000, further preferably 20,000 to 40,000.

When the number-average molecular weight (Mn) of the polymer block S falls within the above range, a molded product, for example, a styrene-type resin sheet, having much better mechanical characteristics and favorable molding appearance with good balance can be obtained.

The number-average molecular weight (Mn) of the polymer block S in the block copolymer a can be controlled by adjusting the amount of the vinyl aromatic monomer supplied (fed) to a polymerization initiator.

(Molecular weight distribution (Mw/Mn) of polymer block S)

The molecular weight distribution (Mw/Mn) of the polymer block S mainly comprising a vinyl aromatic hydrocarbon monomer unit in the block copolymer a is preferably 1.5 to 4.0, more preferably 1.6 to 3.6, further preferably 1.7 to 3.2.

When the molecular weight distribution (Mw/Mn) of the polymer block (S) falls within the above range, the balance between molding processability and the dispersibility of the block copolymer a and the copolymer b tends to be more favorable so that a molded product having favorable molding appearance with no flow mark is obtained.

The molecular weight distribution (Mw/Mn) of the polymer block S in the block copolymer a can be controlled by adjusting the amount of the vinyl aromatic monomer supplied (fed) to a polymerization initiator.

The (meth)acrylic acid and/or (meth)acrylic acid ester monomer means one or more monomers selected from the group consisting of acrylic acid, methacrylic acid, acrylic acid alkyl ester, and methacrylic acid alkyl ester.

The alkyl ester can be one or more ester compounds of an alkyl alcohol having 1 to 8 carbon atoms (C1 to C8) and acrylic acid and/or methacrylic acid.

Examples of the (meth)acrylic acid and/or (meth)acrylic acid ester monomer include acrylic acid, methacrylic acid, acrylic acid $C_{1-6}$ alkyl ester such as methyl acrylate, ethyl acrylate, isopropyl acrylate, n-butyl acrylate (butyl acrylate), n-pentyl acrylate, and n-hexyl acrylate, acrylic acid cycloalkyl ester such as cyclohexyl acrylate, methacrylic acid $C_{1-6}$ alkyl ester such as methyl methacrylate, ethyl methacrylate, isopropyl methacrylate, n-butyl methacrylate, n-pentyl methacrylate, and n-hexyl methacrylate, and methacrylic acid cyclohexyl ester such as cyclohexyl methacrylate. Among them, acrylic acid $C_{1-6}$ alkyl ester or methacrylic acid $C_{1-6}$ alkyl ester is preferred, acrylic acid $C_{1-4}$ alkyl ester or methacrylic acid $C_{1-4}$ alkyl ester is more preferred, methyl acrylate and/or methyl methacrylate is further preferred, and methyl methacrylate is still more preferred, from the viewpoint that the softening temperature of the copolymer b can be further elevated and as a result, the moldability and heat distortion resistance of the molded product of the present embodiment can be further improved.

(Characteristics of molded product)

<Haze value>

The molded product of the present embodiment has an outer haze value of 4.0% or less measured in accordance with ISO14782. As a result, excellent transparency can be achieved.

The outer haze value can be measured by a method described in Examples mentioned later.

The haze value of the molded product can be controlled to the above numeric range by adjusting the weight-average molecular weight and half width of the copolymer b.

<Vicat softening temperature>

The Vicat softening temperature of the molded product of the present embodiment is preferably 80°C or higher, more preferably 90°C or higher.

The molded product having the Vicat softening temperature has high heat distortion resistance and can be suitably used as a material for an electronic component packaging material.

For setting the Vicat softening temperature to the above numeric range, it is preferred to use a styrene-methyl methacrylate copolymer (MS resin) as the copolymer b.

A commercially available product may be used as the MS resin. Examples thereof include "TOYO MS", a product from Toyo Styrene Co., Ltd.

(Extruded product, and method for producing extruded product)

The extruded product of the present embodiment is obtained by extruding the block copolymer composition of the present embodiment mentioned above.

The production method involves mixing the block copolymer a and the copolymer b mentioned above, and optionally adding an additional blending agent thereto to obtain a mixture, followed by extrusion molding.

Specifically, the components are dry-blended at ordinary temperature through or without melt kneading, then heated and melt-kneaded, and extruded from a die (a flat die, a T-shaped die, or any other profile die such as a cylindrical die) to obtain a molded product.

In the case of performing melt kneading in advance, for example, a method may be adopted which involves preparing a block copolymer composition using a mixing machine or a kneading machine such as a kneader, a Banbury mixer, a roll, a ribbon blender, a Henschel mixer, or a single-screw or twin-screw extruder, and extruding the block copolymer composition from a die (a flat die, a T-shaped die, or any other profile die such as a cylindrical die).

The extrusion molding may assume various shapes such as a T die sheet, a cylindrical shape and other profile shapes according to a final purpose.

In the case of a sheet-shaped molded product obtained from a T die, uniaxial drawing or biaxial drawing may be performed, and an undrawn sheet or a low drawn sheet obtained by the action of take-over in the direction of extrusion is general. Examples thereof can include undrawn sheets produced using a T die extruder equipped with an incorporation main roll and a touch roll, and low drawn sheets in the direction of extrusion.

(Injection-molded product and method for producing injection-molded product)

The injection-molded product of the present embodiment is obtained by injection-molding the block copolymer

18

composition of the present embodiment mentioned above.

The production method involves mixing the block copolymer a and the copolymer b mentioned above, and optionally adding an additional blending agent thereto to obtain a mixture, followed by injection molding using an injection molding machine for production.

The injection molding is a molding method of isolating a molded product by heating and melting a molding material, injecting the melted resin into a closed mold, and opening the mold after cooling. An exemplary method involves melt-kneading the block copolymer a and the copolymer b mentioned above in advance using a single-screw extruder or a twin-screw extruder to produce pellets made of a homogeneous composition, which are then added to a hopper of an injection molding machine and molded. Another method can be adopted which involves dry-blending the components at ordinary temperature without melt kneading using an extruder, followed by addition to a hopper of an injection molding machine and molding.

The mechanism of the injection molding machine is not particularly limited, and a toggle style, a direct-pressure style, or the like can be preferably used. A cold runner mold as well as a hot runner mold can be suitably used. The shape of a gate can also be arbitrarily selected as the optimum gate appropriate for the product shape, such as a direct gate, a pin gate, a submarine gate, a tab gate, or a film gate.

In general, injection molding can produce a block copolymer composition and an injection-molded product excellent in transparency as long as the refractive indexes of the block copolymer a and the copolymer b are matched, even if the copolymer b falls outside the requirements for the weight-average molecular weight (Mw) and the requirements for the half width in the molecular weight distribution curve in the block copolymer composition of the present embodiment. This is because, since the block copolymer composition is rapidly cooled in a state pressed against a mold at a high pressure within the mold at the time of injection molding, a transparent injection-molded product is easily obtained as long as the mold surface is a mirrored surface.

On the other hand, in extrusion molding, a melted resin is shaped at the same time with cooling by contact with a roll, a sizing die, or the like. The surface state of a molded product in the solidification process of the melted resin easily follows the course of each step due to the absence of a high pressure used in injection molding.

For example, if the block copolymer a is dispersed in a net-like pattern in the block copolymer composition in the solidification process in extrusion molding, the block copolymer a having a low solidification temperature is solidified later than the copolymer b due to a low glass transition temperature. Therefore, minute wrinkles are generated on the surface of a molded product such as an-extruded sheet. This makes the surface pearskin and tends to incur reduction in transparency.

Whether or not the surface of the molded product becomes pearskin is considered to depend on the dispersion morphology of the block copolymer a. An extruded sheet easily exerts transparency without having a pearskin surface as long as the block copolymer a is an islet phase (dispersed phase) floating in the sea of the copolymer b.

On the other hand, in injection molding as well, when the copolymer b falls outside the conditions for the weight-average molecular weight (Mw) and the requirements for the half width in the molecular weight curve and when the block copolymer a having a low solidification temperature is dispersed in a net-like pattern, large post-molding shrinkage tends to incur dimensional instability such as warpage. Injection molding easily yields a favorable molded product with small warpage as long as the block copolymer a is an islet phase (dispersed phase) floating in the sea of the copolymer b.

The present inventors have identified the problems as mentioned above in each molding method and completed the present invention by finding that a transparent molded article can be achieved in any of the molding methods by adjusting the molecular weight of the copolymer b and the half width thereof.

The wall thickness of the molded product of the present embodiment is not particularly limited.

When the molded product of the present embodiment is an extruded product, the wall thickness is preferably 10 $\mu$m to 4 mm, more preferably 50 $\mu$m to 2.0 mm, further preferably 0.1 mm to 1.5 mm, still more preferably 0.2 mm to 1.2 mm.

On the other hand, the wall thickness of an injection-molded product is preferably 0.1 mm to 10 mm, more preferably 0.2 mm to 5 mm, further preferably 0.3 mm to 4 mm.

The molded product of the present embodiment may have a single-layered or multilayered configuration in its wall thickness direction.

The respective layers of the multilayered configuration may have the same or different resin composition.

When the respective layers have different resin composition, at least one layer within each layer constituting a plurality of layers can comprise a layer made of the block copolymer composition of the present embodiment containing the block copolymer a and the copolymer b mentioned above, and may be an outermost surface or back layer or an inside intermediate layer.

A sheet listing may be blended into at least one intermediate layer for the purpose of in-process recycling. In this case, a fresh material and the recycled material may be blended at an arbitrary ratio, or the recycled material may be used alone. The recycled material is preferably generated from the same line as that of the block copolymer composition of the present invention, and a different resin composition generated from another line may be blended without inhibiting the working effects of the present embodiment.

The surface of the molded product of the present embodiment may be subjected to surface treatment (e.g., discharge treatment such as corona discharge and glow discharge, and acid treatment).

The surface of the molded product of the present embodiment is excellent in printability. Therefore, a conductive coating or an antistatic layer (e.g., a coating with conductive ink) may be formed thereon.

[Characteristics of molded product]

(Folding strength of extruded product)

When the molded product of the present embodiment is an extruded product having a sheet shape obtained using a T die extruder, the fold number measured in accordance with JIS P8115 is preferably 500 or more in both the MD direction and the TD direction. More specifically, a test piece can be regarded as having sufficient rigidity as long as the fold number of the test piece to break in a MIT folding endurance testing machine given a spring load of 9.8 N is 100 or more in any of the MD direction and the TD direction. The fold number is preferably 500 or more.

Particularly, in the case of using the molded product of the present embodiment as a packaging material for an electronic component, a carrier tape, one of the typical forms of the packaging material for an electronic component, is a long packaging material for an electronic component and is not only stored and transported but mounted for use to an assembly apparatus. Therefore, it is required that such a carrier tape should not be easily broken even when bent due to unexpected trouble or the like. Such characteristics can be evaluated on the basis of a fold number to break using a MIT folding endurance testing machine stipulated in JIS P8115: 2001. Further preferably, the fold number is 1000 or more in the machine direction (MD) and 500 or more in the transverse direction (TD). More preferably, the fold number is 1000 or more in both the machine direction (MD) and the transverse direction (TD). Further preferably, the fold number is 2000 or more in both the machine direction (MD) and the transverse direction (TD).

The folding strength of a conventional general T die-extruded sheet depends on the thickness of the sheet. The folding strength of a thinner sheet tends to be improved because of low stress at the time of flex. However, when the molded product of the present embodiment is a T die sheet, the thickness dependence of its folding strength is relatively small as compared with a milky white translucent sheet made of a composition of a block copolymer, general-purpose polystyrene (GPPS) and high-impact polystyrene (HIPS), which is known in the art and frequently used. Furthermore, the thickness range that exhibits a fold number of 100 or more is much wider than that of the conventional sheet known in the art, and even a sheet as relatively thick as 0.5 mm or larger easily exerts a fold number of 100 or more.

(Outer haze value)

The molded product of the present embodiment has an outer haze value of 4.0% or less (e.g., 0% or more and 4.0% or less), preferably 3.5% or less, more preferably 3.0% or less, further preferably 2.5% or less, still more preferably 2.0% or less, measured in accordance with ISO14782.

The haze value is the ratio (unit: %) of a diffuse transmittance to a total light transmittance, and smaller numeric value thereof means higher transparency. Completely transparent matter has a haze value of zero.

The difference in refractive index between the block copolymer a and the copolymer b being just about nil as well as the extrudate skin of an extruded product being smooth and thereby suppressing the scatter of transmitted light is effective for setting the outer haze value of the molded product to 4.0% or less.

(Difference between outer haze and inner haze)

The molded product has two hazes, an "outer haze" as well as an "inner haze", which are generally distinguished from each other.

The "outer haze" is a natural haze including a form factor such as the scatter of transmitted light in the presence of fine asperities depending on the state of the surface skin of the molded product, etc. By contrast, the "inner haze" refers to a haze derived only from a raw material, excluding the form factor.

The "outer haze" is measured directly using the molded product itself obtained by extrusion molding or the like. By contrast, the "inner haze" is a value measured, for example, by cutting a molded product obtained by extrusion into an appropriate size, gently dipping the cut piece in an optical quartz cell filled with liquid paraffin so as not to form air bubbles, and performing measurement using a haze measurement apparatus in this state.

Specifically, the inner haze means a haze derived from the raw material itself of the molded product, which is measured with light scatter suppressed by filling the surface of the molded product with liquid paraffin and thereby canceling minute surface asperities of the molded product.

The molded product of the present embodiment solves problems associated with reduction in transparency caused by light scatter derived from minute asperities of an extrudate surface skin, while improving mechanical characteristics such as flexibility and impact resistance, which are challenges of the conventional technique disclosed in Patent Literature 1. Thus, the molded product of the present embodiment can decrease an outer haze including a form factor of the extrudate skin and drastically improve transparency.

(Method for adjusting haze value of molded product)

In the molded product of the present embodiment, the haze value can be controlled by adjusting the monomer composition of the block copolymer a, the monomer composition of the copolymer b, and the physical properties of the copolymer b.

Specifically, the haze value of the molded product of the present embodiment can be controlled by: setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5; setting a mass ratio between the vinyl aromatic hydrocarbon monomer unit and the above (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10; allowing the copolymer b to contain a copolymer component (b-1) having a weight-average molecular weight (Mw) of 150,000 or larger and 350,000 or smaller and a copolymer (b-2) having a weight-average molecular weight (Mw) of 50,000 or larger and smaller than 150,000; and adjusting a compositional ratio between the components (b-1) and (b-2) to (b-1)/(b-2) = 95/5 to 40/60.

(Method for adjusting haze value of extruded product)

When the molded product of the present embodiment is an extruded product, the haze value of the extruded product can be controlled by adjusting the monomer composition of the block copolymer a, the monomer composition of the copolymer b, and the physical properties of the copolymer b.

Specifically, the haze value of the extruded product can be controlled by: setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5; setting a mass ratio between the vinyl aromatic hydrocarbon monomer unit and the above (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10; adjusting a weight-average molecular weight and a half width of the copolymer (b) such that the copolymer b has a weight-average molecular weight (Mw) of 150,000 or larger and 250,000 or smaller as measured by a gel permeation chromatography measurement method, and a half width (ratio of a full width at a position of 50% of a peak height to a length from 1,000 to 1,000,000 on the logarithmic abscissa) of 30% or more in a molecular weight distribution curve.

(Refractive index)

For allowing the block copolymer composition for use in the molded product of the present embodiment to exert excellent transparency, it is required that the block copolymer a and the copolymer b constituting the block copolymer composition should have proximate refractive indexes.

The absolute value of difference in refractive index is preferably 0.004 or less, more preferably 0.003 or less, further preferably 0.002 or less, still more preferably 0.001 or less.

When this absolute value of difference in refractive index is equal to or less than the above value, the extruded product of the present embodiment can have an outer haze value of 4.0% or less.

The respective refractive indexes of the block copolymer a and the copolymer b tend to be able to be unambiguously determined depending on the types of their respective monomer units and the contents of the monomer units. For example, in the case of the copolymer b, a polymer having a vinyl aromatic hydrocarbon monomer unit content of 100% by mass has the highest refractive index, and the refractive index is decreased by increasing the content of the (meth)acrylic acid and/or (meth)acrylic acid alkyl ester monomer unit with respect to the total sum of the vinyl aromatic hydrocarbon monomer unit and the (meth)acrylic acid and/or (meth)acrylic acid alkyl ester monomer unit. Thus, the refractive index of the block copolymer a can be adjusted by controlling the mass ratio between the vinyl aromatic hydrocarbon monomer unit and the conjugated diene monomer unit in the block copolymer a, and the refractive index of the copolymer b can be adjusted by controlling the mass ratio between the vinyl aromatic hydrocarbon monomer unit and the (meth)acrylic acid and/or (meth)acrylic acid alkyl ester monomer unit in the block copolymer b. The difference in refractive index can be set to close to zero by appropriately adjusting the respective refractive indexes of the block copolymer a and the copolymer b.

The refractive indexes of the block copolymer a and the copolymer b can be easily measured with an Abbe refractive index meter. Specifically, films of a block copolymer a component and a copolymer b component having a thickness of approximately 0.2 mm are prepared using a compression molding machine. The films are left in an environment having an atmospheric temperature of 23°C and a humidity of 50% for 24 hours. After a lapse of this time, the refractive indexes can be measured in accordance with JIS K7142: 2008 "Plastics - Determination of refractive index" at a measurement light wavelength of 589 nm using an Abbe refractometer manufactured by Atago Co., Ltd.

As mentioned above, the outer haze of the molded product of the present embodiment is a natural haze value of an extruded product, including a form factor such as the surface asperities of the molded product obtained by extrusion molding, etc.

When the outer haze value is 4.0% or less, the molded product of the present embodiment possesses excellent transparency and can produce a packaging member that is excellent, particularly, in visibility and ease of inspection of the contents, suitable for the purpose of packaging electronic components, and also excellent in transparency.

(Heat distortion resistance)

The molded product of the present embodiment, for example, a carrier tape, is heated again and molded into a final product electronic component packaging material by vacuum molding, compression molding, or the like. This molding is performed under given tension, and transport or storage in a high-temperature environment is also assumed. Therefore, the molded product of the present embodiment preferably has heat distortion resistance to some extent.

The heat distortion resistance can be evaluated on the basis of a Vicat softening temperature stipulated by ISO306.

Measurement conditions involve a load of 10 N and a temperature increase rate of 50°C/hr.

As for a sample shape, the extruded product may be difficult to measure as it is. Therefore, a test piece having a thickness of 4 mm is prepared by heat press molding again, and the measurement can be performed using the test piece.

In the case of using the molded product of the present embodiment as an electronic component packaging material, the Vicat softening temperature is preferably 80°C or higher, more preferably 85°C or higher, further preferably 90°C or higher.

The extruded product having a Vicat softening temperature of 80°C or higher thus used has favorable moldability and is excellent in quality as an electronic component packaging material.

[Packaging member]

The molded product of the present embodiment can be used as a packaging member.

The "packaging member" includes a packaging container.

The packaging member is obtained directly from the molded product of the present embodiment or through secondary processing by reheating, such as vacuum molding or compression molding, or machining or cutting.

The processing method for obtaining a packaging material for an electronic component from the extruded product is not limited by any means, and a molding method known in the art can be adopted.

Examples of the molding method for obtaining a packaging material for an electronic component from, for example, a T die sheet which is the extruded product include vacuum molding, compressed air molding, blow molding, bending, and match mold molding as well as heat molding methods known in the art such as plug-assisted molding, air slip molding, hot-plate compressed air molding, and vacuum compressed air molding, all of which can be suitably used.

In the case of a magazine tube, secondary processing by cutting which involves cutting into the desired length is general because the magazine tube is usually formed by profile extrusion molding.

The packaging material for an electronic component is a resin product that packages various electronic components, and is a packaging material made of a resin for packaging semiconductors, integrated circuits (IC), condensers, and the like. For this purpose, a packaging material that can be not only stored and transported but can be mounted directly to an assembly apparatus is mainstream. A tube-shaped, tray-shaped, or tape-shaped material is frequently used as the packaging material for an electronic component. Particularly, a "magazine tube" or a "carrier tape" can be suitably used.

Profile extrusion molding for magazine tubes, etc. is mainly performed by shaping through pressure bonding to a sizing die using air, without a roll touch to a melted resin as in T die sheet molding. Therefore, the smoothness of an extrudate skin is particularly important. For the magazine tubes, it is reportedly more difficult to exert transparency as compared with T die sheets. Also, a given level of or higher melt viscosity, such as draw down resistance, is necessary.

Meanwhile, carrier tapes wound around resin reels are widely used as packaging materials mountable directly to assembly apparatuses. Such a carrier tape may be required to have transparency that can render the contents visible or allows the contents to be inspected, depending on the contents, as characteristics. The carrier tape is a long packaging material for an electronic component, and its break due to unexpected trouble or the like during mounting is responsible for a major defect in performing automatic production and/or large-scale production by mechanization. Therefore, high folding strength that prevents the carrier tape from being easily broken is strongly required.

Examples

Hereinafter, the present embodiment will be described in more detail with reference to specific Examples and Comparative Examples. However, the present embodiment is not limited by Examples given below by any means.

Block copolymer a and copolymer b were produced, and these raw materials were each formed into a pellet shape and blended.

The method for blending the components involved dry-blending the pellets of the block copolymer a and the pellets of the copolymer b at the ratios shown in Tables 3 to 5 below without performing preliminary melt blending using an extruder, and directly adding the blend to an injection molding machine or an extrusion molding machine to carry out melt blending and the production of a molded product at the same time.

A flat plate-shaped molded product having a thickness of 1 mm was produced in injection molding, and various molded products differing in thickness from each other were produced in extrusion molding. A test piece was obtained from each of the molded products and evaluated for various physical properties.

[Production Examples 1 to 7]

Each of block copolymers a1 to a7 was produced as the block copolymer a as shown below.

[Production Example 1 (block copolymer a1)]

In a nitrogen gas atmosphere, 0.08 parts by mass of n-butyllithium and 0.015 parts by mass of tetramethylmethylenediamine were added to a cyclohexane solution containing 20 parts by mass of styrene at a concentration of 25% by mass, followed by polymerization at 80°C for 20 minutes. Then, a cyclohexane solution containing 8 parts by mass of 1,3-butadiene at a concentration of 25% by mass was added in one portion to the obtained polymerization solution, followed by polymerization at 80°C for 15 minutes. Next, a cyclohexane solution containing 9 parts by mass of 1,3-butadiene and 15 parts by mass of styrene at a concentration of 25% by mass was continuously added to the polymerization solution over 30 minutes, while polymerization was performed at 80°C. Next, a cyclohexane solution containing 8 parts by mass of 1,3-butadiene at a concentration of 25% by mass was added in one portion to the polymerization solution, followed by polymerization at 80°C for 15 minutes. Next, a cyclohexane solution containing 3 parts by mass of styrene at a concentration of 25% by mass was added to the polymerization solution, followed by polymerization at 80°C for 5 minutes. Next, ethanol was added at 0.4 times the mol of n-butyllithium to the polymerization solution, and the mixture was kept for 5 minutes to partially inactivate polymerization and terminate some polymerization reactions. Next, a cyclohexane solution containing 37 parts by mass of styrene at a concentration of 25% by mass was added to the polymerization solution, followed by polymerization at 80°C for 25 minutes.

Then, in order to completely terminate polymerization, ethanol was added in an amount of 0.6 times the mol of n-butyllithium into the reactor, and 0.3 parts by mass of 2-t-butyl-6(3-t-butyl-2-hydroxy-5-methylbenzyl)-4-methylphenyl acrylate were added as a heat stabilizer with respect to 100 parts by mass of the block copolymer. Then, the solvent was removed to recover block copolymer a1.

[Production Example 2 (block copolymer a2)]

In a nitrogen gas atmosphere, 0.08 parts by mass of n-butyllithium and 0.015 parts by mass of tetramethylmethylenediamine were added to a cyclohexane solution containing 20 parts by mass of styrene at a concentration of 25% by mass, followed by polymerization at 80°C for 20 minutes (step 1). Next, a cyclohexane solution containing 14 parts by mass of 1,3-butadiene and 10 parts by mass of styrene at a concentration of 25% by mass was continuously added to the polymerization solution over 30 minutes, while polymerization was performed at 80°C (step 2). Next, a cyclohexane solution containing 16 parts by mass of 1,3-butadiene and 10 parts by mass of styrene at a concentration of 25% by mass was continuously added to the polymerization solution over 30 minutes, while polymerization was performed at 80°C (step 3). Next, a cyclohexane solution containing 30 parts by mass of styrene at a concentration of 25% by mass was added to the polymerization solution, followed by polymerization at 80°C for 30 minutes (step 4).

Then, in order to completely terminate polymerization, ethanol was added at the same mol as that of n-butyllithium into the reactor, and 0.3 parts by mass of 2-t-butyl-6(3-t-butyl-2-hydroxy-5-methylbenzyl)-4-methylphenyl acrylate were added as a heat stabilizer with respect to 100 parts by mass of the block copolymer. Then, the solvent was removed to recover block copolymer a2.

[Production Example 3 (block copolymer a3)]

Block copolymer a3 was recovered under the same conditions as in the above [Production Example 2] except that: in the above (step 1), 20 parts by mass of styrene were changed to 31 parts by mass of styrene; in the above (step 2), 14 parts by mass of 1,3-butadiene and 10 parts by mass of styrene were changed to 21 parts by mass of 1,3-butadiene and 20 parts by mass of styrene; in the above (step 3), 16 parts by mass of 1,3-butadiene and 10 parts by mass of styrene were changed to 2 parts by mass of 1,3-butadiene and 6 parts by mass of styrene; and in the above (step 4), 30 parts by mass of styrene were changed to 20 parts by mass of styrene.

[Production Example 4 (block copolymer a4)]

In a nitrogen gas atmosphere, 0.08 parts by mass of n-butyllithium and 0.015 parts by mass of tetramethylmethylenediamine were added to a cyclohexane solution containing 15 parts by mass of styrene at a concentration of 25% by mass, followed by polymerization at 80°C for 20 minutes (step 1). Next, a cyclohexane solution containing 38 parts by mass of 1,3-butadiene and 10 parts by mass of styrene at a concentration of 25% by mass was continuously added to the polymerization solution over 30 minutes, while polymerization was performed at 80°C (step 2). Next, a cyclohexane solution containing 37 parts by mass of styrene at a concentration of 25% by mass was added to the polymerization solution, followed by polymerization at 80°C for 30 minutes (step 3) .

Then, in order to completely terminate polymerization, ethanol was added at the same mol as that of n-butyllithium into the reactor, and 0.3 parts by mass of 2-t-butyl-6(3-t-butyl-2-hydroxy-5-methylbenzyl)-4-methylphenyl acrylate were added as a heat stabilizer with respect to 100 parts by mass of the block copolymer. Then, the solvent was removed to recover block copolymer a4.

[Production Example 5 (block copolymer a5)]

Block copolymer a5 was recovered under the same conditions as in the above [Production Example 2] except that: in the above (step 1) in the Production Example 2, 20 parts by mass of styrene were changed to 26 parts by mass of styrene; and in the above (step 4) in the Production Example 2, 30 parts by mass of styrene were changed to 24 parts by mass of styrene.

[Production Example 6 (block copolymer a6)]

In a nitrogen gas atmosphere, 0.08 parts by mass of n-butyllithium and 0.015 parts by mass of tetramethylmethylenediamine were added to a cyclohexane solution containing 60 parts by mass of styrene at a concentration of 25% by mass, followed by polymerization at 80°C for 20 minutes. Next, a cyclohexane solution containing 30 parts by mass of 1,3-butadiene and 10 parts by mass of styrene at a concentration of 25% by mass was continuously added to the polymerization solution over 30 minutes, while polymerization was performed at 80°C.

Then, in order to completely terminate polymerization, ethanol was added at the same mol as that of n-butyllithium into the reactor, and 0.3 parts by mass of 2-t-butyl-6(3-t-butyl-2-hydroxy-5-methylbenzyl)-4-methylphenyl acrylate were added as a heat stabilizer with respect to 100 parts by mass of the block copolymer. Then, the solvent was removed to recover block copolymer a6.

[Production Example 7 (block copolymer a7)]

Block copolymer a7 was recovered under the same conditions as in the above [Production Example 4] except that: in the above (step 1) in the Production Example 4, 15 parts by mass of styrene were changed to 17 parts by mass of styrene; in the above (step 2) in the Production Example 4, 38 parts by mass of 1,3-butadiene and 10 parts by mass of styrene were changed to 60 parts by mass of 1,3-butadiene and 7 parts by mass of styrene; and in the above (step 3) in the Production Example 4, 37 parts by mass of styrene were changed to 16 parts by mass of styrene.

Table 1 below shows the structures and various physical properties of the block copolymers a1 to a7 obtained by the above [Production Examples 1 to 7].

[Table 1]

| | Production Example 1 | Production Example 2 | Production Example 3 | Production Example 4 | Production Example 5 | Production Example 6 | Production Example 7 |
|---|---|---|---|---|---|---|---|
| | a1 | a2 | a3 | a4 | a5 | a6 | a7 |
| Structure of block copolymer a | S1-B1-B/S-B2-S2 | S1-B/S1-B/S2-S2 | S1-B/S1-B/S2-S2 | S1-B/S1-S2 | S1-B/S1-B/S2-S2 | S1-B/S1 | S1-B/S1-S2 |
| Amounts of vinyl aromatic monomer and conjugated diene monomer added (mass ratio) | 20-8-9/15-8-3 20-8-9/15-8-40 | 20-14/10-16/10-30 | 31-21/20-2/6-20 | 15-38/10-37 | 26-14/10-16/10-24 | 60-30/10 | 17-60/7-16 |
| Content of vinyl aromatic monomer unit (mass%) | 75 | 70 | 77 | 62 | 70 | 70 | 40 |
| Content of conjugated diene monomer unit (mass%) | 25 | 30 | 23 | 38 | 30 | 30 | 60 |
| Weight-average molecular weight Mw (10K) | 15.1 | 12.0 | 11.6 | 13.5 | 12.1 | 10.6 | 8.4 |
| Number-average molecular weight Mn (10K) | 9.4 | 9.0 | 8.5 | 9.9 | 9.1 | 8.8 | 8.1 |
| Molecular weight distribution Mw/Mn | 1.61 | 1.33 | 1.36 | 13.6 | 1.33 | 1.20 | 1.04 |
| Peak molecular weight (10K) | 20.2/7.3 | 12.4 | 11.9 | 13.9 | 12.4 | 10.9 | 8.6 |
| The number of molecular weight peaks | 2 | 1 | 1 | 1 | 1 | 1 | 1 |
| The number of times of addition of ethanol in middle | 1 | None | None | None | None | None | None |
| Number-average molecular weight Mn of polymer block S (10K) | 4.3 | 2.7 | 2.0 | 3.4 | 2.5 | 7.7 | 1.3 |
| Molecular weight distribution Mw/Mn of polymer block S | 2.8 | 1.7 | 1.6 | 2.1 | 1.3 | 1.1 | 1.1 |
| Melt flow rate | 5.9 | 6.5 | 7.0 | 7.1 | 6.3 | 9.0 | 20 |

EP 3 916 050 A1

The respective structures and physical properties of the block copolymers a1 to a7 shown in Table 1 were measured according to the following methods.

(Content of vinyl aromatic monomer unit (styrene unit) in each of block copolymers a1 to a7)

The content of the vinyl aromatic monomer unit in the block copolymers a1 to a7 was measured with a UV meter (ultraviolet absorptiometer).

Specifically, approximately 30 mg (accurately weighed down to 0.1 mg) of each of the block copolymers a1 to a7 was dissolved in 100 mL of chloroform, and a quartz cell was filled with the polymer solution and loaded in an analysis apparatus. This sample was scanned with ultraviolet wavelengths of 260 to 290 nm, and the content was determined by use of the calibration curve method from the obtained value of an absorption peak height.

When the vinyl aromatic monomer is styrene, a peak wavelength appears at 269.2 nm.

(Content of conjugated diene monomer unit (butadiene unit) in each of block copolymers a1 to a7)

The content of the conjugated diene monomer unit (butadiene unit) in the block copolymers a1 to a7 was calculated by subtracting the % by mass of the vinyl aromatic monomer unit obtained as described above from 100% by mass.

(Weight-average molecular weight Mw, number-average molecular weight Mn, molecular weight distribution Mw/Mn, peak molecular weight, and the number of molecular weight peaks of each of block copolymers a1 to a7)

The weight-average molecular weight (Mw), number-average molecular weight (Mn), molecular weight distribution (Mw/Mn), peak molecular weight, and the number of molecular weight peaks of each of the block copolymers a1 to a7 were measured under the following measurement conditions using a gel permeation chromatography (GPC) apparatus.

<Measurement conditions>

GPC apparatus: HLC-8220 manufactured by Tosoh Corp.
Column: two columns of SuperMultiporeHZ-M manufactured by Tosoh Corp. were connected in series
Column temperature: 40°C
Liquid feed rate: 0.2 mL/min
Detector: refractometer (RI)

Tetrahydrofuran was used as a solvent. Approximately 10 mg of the polymer targeted by molecular weight measurement was dissolved in 20 mL of tetrahydrofuran, and insoluble matter was filtered off to obtain a sample for GPC measurement.

A specific measurement method will be mentioned below. First, a calibration curve was prepared using 9 standard polystyrene samples having known molecular weights different from each other. The weight-average molecular weight (Mw) of standard polystyrene having the highest molecular weight was 1090000, and the weight-average molecular weight (Mw) of the standard polystyrene having the lowest molecular weight used was 1050. Subsequently, a sample for measurement was prepared by the above procedures using the block polymer (a) whose molecular weight was to be measured.

After confirmation that the temperature within a vessel containing a column became constant, the solution sample was injected thereto to start measurement. After the completion of measurement, the obtained molecular weight distribution curve was statistically processed to calculate the weight-average molecular weight (Mw) and the number-average molecular weight (Mn). The molecular weight distribution (Mw/Mn) was defined as a value obtained by dividing the obtained weight-average molecular weight (Mw) by the number-average molecular weight (Mn). The peak molecular weight and the number of molecular weight peaks were determined from the molecular weight distribution curve.

(Weight-average molecular weight (Mw), number-average molecular weight (Mn), and molecular weight distribution (Mw/Mn) of polymer block (S) mainly comprising vinyl aromatic monomer unit in each of block copolymers a1 to a7)

Next, the molecular weight of the polymer block (S) mainly comprising a vinyl aromatic monomer unit and constituting each of the block copolymers a1 to a7 was measured.

Specifically, approximately 20 mg of each block copolymer was dissolved in approximately 10 mL of chloroform. Then, 20 mL of an osmic acid solution was added to the solution, and the mixture was double-boiled for 30 minutes to degrade the conjugated diene moiety.

Approximately 200 mL of methanol was gently poured to the polymer solution after the degradation to precipitate a component insoluble in the solvent.

This precipitated component is the polymer block (S), and a styrene monomer that has not formed a block or styrene having a low degree of polymerization remains dissolved in a methanol/tertiary butyl alcohol/chloroform mixed solution. This precipitate was filtered, then washed with pure methanol, and dried in vacuum to obtain the polymer block (S).

In this context, the osmic acid solution mentioned above is a solution obtained by dissolving and mixing 1 g of osmium(VIII) oxide and 2 kg of trade name "Perbutyl H (chemical name: tertiary butyl hydroperoxide, purity: 69%)" launched and available from NOF Corp. in 3 L of tertiary butyl alcohol.

Approximately 10 mg of the polymer block (S) thus obtained was dissolved again in 20 mL of tetrahydrofuran and measured with a GPC apparatus. Measurement conditions and method abided by the measurement conditions and method for the molecular weight of the block copolymer a.

(Melt flow rate of block copolymer a)

The melt flow rate was measured under conditions involving a temperature of 200°C and a load of 5 kgf in accordance with the standard ISO1133.

[Production Examples 8 to 17]

Next, the copolymer b was prepared as shown below.

For the preparation of the copolymer b, first, copolymers (b-1)1 to (b-1)5 having Mw of 150,000 or larger and 350,000 or smaller, and copolymers (b-2)2 to (b-2)5 having Mw of 50,000 or larger and smaller than 150,000 were prepared. These copolymers were each used singly or used as a mixture in combination.

Also, copolymer b6 having Mw of 150,000 or larger and 250,000 or smaller was prepared.

[Production Example 8]

In a nitrogen gas atmosphere, 69.7 parts by mass of styrene, 15.3 parts by mass of butyl acrylate, 15 parts by mass of ethylbenzene, and 0.02 parts by mass of 1,1-bis(t-butylperoxy)cyclohexane (trade name Perhexa C manufactured by NOF Corp.) were prepared to obtain a raw material composition solution, which was then charged into a reactor where continuous bulk polymerization was performed at a reaction temperature of 120°C. Then, 0.2 parts by mass of 3-(3,5-di-tert-butyl-4-hydroxyphenyl)propionic acid (trade name Irganox 1076 manufactured by BASF Japan Ltd.) were added thereto as an antioxidant. Then, the solvent and unreacted monomers were removed to recover copolymer (b-1)1.

[Production Example 9]

In a nitrogen gas atmosphere, 68.0 parts by mass of styrene, 17.0 parts by mass of methyl methacrylate, 15 parts by mass of ethylbenzene, and 0.02 parts by mass of 2,2-bis(4,4-di-tert-butylperoxycyclohexyl)propane (trade name Pertetra A manufactured by NOF Corp.) were prepared to obtain a raw material composition solution, which was then charged into a reactor where continuous bulk polymerization was performed at a reaction temperature of 120°C. Then, 0.2 parts by mass of 3-(3,5-di-tert-butyl-4-hydroxyphenyl)propionic acid were added thereto as an antioxidant. Then, the solvent and unreacted monomers were removed to recover copolymer (b-1)2.

[Production Example 10]

In a nitrogen gas atmosphere, 59.5 parts by mass of styrene, 25.5 parts by mass of methyl methacrylate, 15 parts by mass of ethylbenzene, and 0.02 parts by mass of 2,2-bis(4,4-di-tert-butylperoxycyclohexyl)propane were prepared to obtain a raw material composition solution, which was then charged into a reactor where continuous bulk polymerization was performed at a reaction temperature of 120°C. Then, 0.2 parts by mass of 3-(3,5-di-tert-butyl-4-hydroxyphenyl)propionic acid were added thereto as an antioxidant. Then, the solvent and unreacted monomers were removed to recover copolymer (b-1)3.

[Production Example 11]

In a nitrogen gas atmosphere, 34.0 parts by mass of styrene, 51.0 parts by mass of methyl methacrylate, 15 parts by mass of ethylbenzene, and 0.02 parts by mass of 2,2-bis(4,4-di-tert-butylperoxycyclohexyl)propane were prepared to obtain a raw material composition solution, which was then charged into a reactor where continuous bulk polymerization was performed at a reaction temperature of 120°C. Then, 0.2 parts by mass of 3-(3,5-di-tert-butyl-4-hydroxyphenyl)propionic acid were added thereto as an antioxidant. Then, the solvent and unreacted monomers were removed to recover copolymer (b-1)4.

[Production Example 12]

In a nitrogen gas atmosphere, 78.2 parts by mass of styrene, 6.8 parts by mass of methacrylic acid, 15 parts by mass of ethylbenzene, and 0.02 parts by mass of 1,1-bis(t-butylperoxy)cyclohexane (trade name Perhexa C manufactured by NOF Corp.) were prepared to obtain a raw material composition solution, which was then charged into a reactor where continuous bulk polymerization was performed at a reaction temperature of 120°C. Then, 0.2 parts by mass of 3-(3,5-di-tert-butyl-4-hydroxyphenyl)propionic acid were added thereto as an antioxidant. Then, the solvent and unreacted monomers were removed to recover copolymer (b-1)5.

[Production Examples 13 to 16]

In Production Example 13 combined with Production Example 9, Production Example 14 combined with Production Example 10, Production Example 15 combined with Production Example 11, and Production Example 16 combined with Production Example 12, monomer ratios were set so as to attain basically the same copolymerization ratio among these examples. The amount of organic peroxide was adjusted, and in addition, an $\alpha$ methylstyrene dimer was appropriately added as a chain transfer agent to the polymerization system. Polymerization was performed with only the molecular weight decreased in each of the examples to produce the desired copolymers (b-2)2 to (b-2)5.

In the above [Production Example 8], butyl acrylate was used as a monomer raw material. Therefore, the composition had lower heat resistance and thus a lower Vicat softening temperature. Thus, a sufficiently low outer haze value and favorable transparency were attained by merely using the high-molecular-weight type (b-1) without the combined use of the low-molecular-weight type (b-2). Hence, the production of the low-molecular-weight polymer corresponding to [Production Example 8] was omitted.

[Production Example 17]

Monomer ratios were set so as to attain basically the same copolymerization ratio in the above [Production Example 9]. The amount of organic peroxide was adjusted, and in addition, an $\alpha$ methylstyrene dimer was appropriately added as a chain transfer agent to the polymerization system. Polymerization was performed with the molecular weight equivalent to that of [Production Example 9] and the molecular weight distribution controlled to be larger than that of [Production Example 9] to produce the desired copolymer (b-2)6.

PSJ Polystyrene 685 manufactured by PS Japan Corp. was used as styrene homopolymer resin (GPPS) for use in Comparative Examples.

The styrene homopolymer resin (GPPS) is a styrene homopolymer containing no (meth)acrylic acid (alkyl ester) monomer and is referred to as "polymer c" in the present specification.

PSJ Polystyrene HT478 manufactured by PS Japan Corp. was used as high-impact polystyrene containing occluded rubber particles for use in Reference Examples mentioned later.

Table 2 below shows the structures and physical properties of the block copolymers (b-1)1 to (b-1)5 and (b-2)2 to (b-2)5 obtained by Production Examples 8 to 16, the block copolymer b6 obtained by Production Example 17, and the polymer c which is a styrene homopolymer.

[Table 2]

| | Production Example 8 (b-1)1 | Production Example 9 (b-1)2 | Production Example 13 (b-2)2 | Production Example 17 b6 | Production Example 10 (b-1)3 | Production Example 14 (b-2)3 | Production Example 11 (b-1)4 | Production Example 15 (b-2)4 | Production Example 12 (b-1)5 | Production Example 16 (b-2)5 | c |
|---|---|---|---|---|---|---|---|---|---|---|---|
| Vinyl aromatic monomer unit: Monomer species | Styrene | Styrene | Styrene | Styrene | Styrene | Styrene | Styrene | Styrene | Styrene | Styrene | Styrene |
| Content in copolymer (mass%) | 82 | 80 | 80 | 80 | 70 | 70 | 40 | 40 | 92 | 92 | 100 |
| (Meth)acrylic acid and/or (meth)acrylic acid alkyl ester monomer unit: Monomer species | Butyl acrylate | Methyl methacrylate | Methyl methacrylate | Methyl methacrylate | Methyl methacrylate | Methyl methacrylate | Methyl methacrylate | Methyl methacrylate | Methacrylic acid | Methacrylic acid | - |
| Content in copolymer (mass%) | 18 | 20 | 20 | 20 | 30 | 30 | 60 | 60 | 8 | 8 | 0 |
| Peak molecular weight (10K) | 31.2 | 21.7 | 10.4 | 20.8 | 18.2 | 10.2 | 22.0 | 7.5 | 24.5 | 13.8 | 27.0 |
| Weight-average molecular weight Mw (10K) | 30.3 | 20.0 | 11.2 | 19.1 | 17.5 | 10.8 | 22.6 | 8.1 | 23.0 | 13.7 | 26.1 |
| Number-average molecular weight Mn (10K) | 9.3 | 7.0 | 4.8 | 6.2 | 6.2 | 4.6 | 8.3 | 3.6 | 9.5 | 5.8 | 11.1 |
| Molecular weight distribution Mw/Mn | 3.25 | 2.86 | 2.33 | 3.08 | 2.82 | 2.35 | 2.72 | 2.25 | 2.42 | 2.36 | 2.34 |
| Half width (%) | 27 | 29 | 31 | 34 | 29 | 31 | 28 | 32 | 27 | 29 | 27 |
| Vicat softening temperature (°C) | 73 | 99 | 97 | 98 | 100 | 98 | 100 | 98 | 118 | 116 | 103 |
| Melt flow rate (200°C* 5 kg) | 6.5 | 1.9 | 15 | 3.0 | 4.0 | 18 | 1.0 | 20 | 1.5 | 12 | 2.1 |

The structures and physical properties of each of the copolymers (b-1)1 to (b-1)5, (b-2)2 to (b-2)5, and b6, and the polymer c (hereinafter, also referred to as "copolymer b or c") shown in Table 2 were measured according to the following methods.

(Content of vinyl aromatic monomer (styrene) in copolymer b or c)

The content of the vinyl aromatic monomer unit in the copolymer b or c was measured with a UV meter (ultraviolet absorptiometer).
Specifically, approximately 30 mg (accurately weighed down to 0.1 mg) of the copolymer b or c was dissolved in 100 mL of chloroform, and a quartz cell was filled with the polymer solution and loaded in an analysis apparatus. This sample was scanned with ultraviolet wavelengths of 260 to 290 nm, and the content was determined by use of the calibration curve method from the obtained value of an absorption peak height.
When the vinyl aromatic monomer is styrene, a peak wavelength appears at 269.2 nm.

((Meth)acrylic acid (alkyl ester) content of copolymer b or c)

The (meth)acrylic acid (alkyl ester) content of the copolymer b or c was calculated by subtracting the % by mass of the vinyl aromatic monomer unit obtained as described above from 100% by mass.

(Peak molecular weight, weight-average molecular weight Mw, number-average molecular weight Mn, molecular weight distribution Mw/Mn, and half width of copolymer b or c)

The peak molecular weight, weight-average molecular weight (Mw), number-average molecular weight (Mn), molecular weight distribution (Mw/Mn), and half width of the copolymer b or c were measured under the following measurement conditions using a gel permeation chromatography (GPC) apparatus.

<Measurement conditions>

GPC apparatus: HLC-8220 manufactured by Tosoh Corp.
Column: two columns of SuperMultiporeHZ-M manufactured by Tosoh Corp. were connected in series
Column temperature: 40°C
Liquid feed rate: 0.2 mL/min
Detector: refractometer (RI)

Tetrahydrofuran was used as a solvent. 50 mg of the polymer targeted by molecular weight measurement was completely dissolved by the addition of 10 mL of tetrahydrofuran, and insoluble matter was filtered off to obtain a sample for GPC measurement.
A specific measurement method will be mentioned below.
First, a calibration curve was prepared using 9 standard polystyrene samples having known molecular weights different from each other.
The weight-average molecular weight (Mw) of standard polystyrene having the highest molecular weight was 1,090,000, and the weight-average molecular weight (Mw) of the standard polystyrene having the lowest molecular weight used was 1,050.
Subsequently, a sample for measurement was prepared by the above procedures using the copolymer b or c whose molecular weight was to be measured.
After confirmation that the temperature within a vessel containing a column became constant, the solution sample was injected thereto to start measurement. After the completion of measurement, the obtained molecular weight distribution curve was statistically processed to calculate the peak molecular weight, the weight-average molecular weight (Mw) and the number-average molecular weight (Mn). The molecular weight distribution (Mw/Mn) was defined as a value obtained by dividing the obtained weight-average molecular weight (Mw) by the number-average molecular weight (Mn). The peak molecular weight was determined from the molecular weight distribution curve.

(Vicat softening temperature of copolymer b or c)

The Vicat softening temperature was measured at a temperature increase rate of 50°C/hr with a load of 10 N in accordance with the standard ISO306.

(Melt flow rate of copolymer b or c)

The melt flow rate was measured at a temperature of 200°C with a load of 5 kgf in accordance with the standard ISO1133.

[Injection molding of block copolymer composition]

In Examples and Comparative Examples mentioned later, resin compositions were produced using the block copolymer a, the copolymer b, and the polymer c.
These resin compositions were used to evaluate warpage in injection-molded pieces.
In injection molding, an injection molding machine FE-120 (mold clamping pressure: 120 tons) manufactured by Nissei Plastic Industrial Co., Ltd. was used, and the mold used was a mirrored-finish flat plate mold having a thickness of 1 mm, short sides of 100 mm, and long sides of 150 mm, and having a film gate on the short sides. A flat molded product having a thickness of 1 mm was obtained at a cylinder temperature of 210°C and a mold temperature of 50°C at an injection pressure added by 5% to a short-shot point.
Molding cycles were carried out by injection for 7 seconds and cooling for 20 seconds.

(Flatness evaluation of warpage of injection-molded product)

The flat molded product obtained by injection molding was left for curing for 24 hours in a constant-temperature room of 23°C. Then, flatness evaluation was carried out on the warpage of the flat molded product having a thickness of 1 mm.
Specifically, the evaluation was conducted according to the flatness stipulated by JIS B0621: 1984 "Definitions and Designations of Geometrical Deviations".

Flatness of less than 0.2 mm: ○
Flatness of 0.2 mm or more and less than 0.5 mm: △
Flatness of 0.5 mm or more: ×

[Extrusion molding of block copolymer composition]

In Examples and Comparative Examples mentioned later, block copolymer compositions were produced using the block copolymer a, the copolymer b, and the polymer c.
These block copolymer compositions were used to carry out extrusion molding into small lab sheets.
In sheet molding, a sheet extrusion molding machine FS40-36V + TS400 (with a single screw and Dulmage kneading, screw diameter: 40 mm, L/D = 36, T die width: 400 mm, mirrored roll) manufactured by Ikegai Corp. was used. Each single-layered sheet having a thickness of 0.25 mm or 0.60 mm was prepared by adjusting the number of screw rotations and a roll take-over speed at a cylinder temperature of 210°C and a roll temperature of 70°C.
Both ends were trimmed by approximately 30 mm each to obtain a master sheet having a width of 220 mm.

(Outer haze value)

The molded products obtained by injection molding or extrusion molding mentioned above were cut into an appropriate size to prepare test pieces for measurement, which were then measured using a haze meter model HZ-1 manufactured by Suga Test Instruments Co., Ltd. (unit: %).
If the haze value exceeds 40%, accurate measurement is impossible, as also described in ISO14782. In this case, results of Examples were described as "over 40 (opaque)".
Table 3 shows the outer haze values of the injection-molded products, and Table 4 shows the outer haze values of the extruded products.

(MIT folding strength)

The extruded products obtained as mentioned above were cut into a size involving a width of 15 mm and a length of 110 mm to prepare test pieces.
The MIT folding endurance testing machine used was model BE-201 (spring type) manufactured by Tester Sangyo Co., Ltd. The flex number of each sample to break was measured at ordinary temperature of 23°C with a spring load of 9.8 N, 175 cycles/min, and a flex angle of 135°C.
One round trip was counted as a flex number of 1.

A counter attached to the MIT folding endurance testing machine counts one time when a sample is in an upright state upon passage of a flexion right below the counter. Thus, the first one time substantially means 0.5 times, which were in turn counted as a fold number of 1.

For the MIT folding endurance test, the absence of a sheet sample defect (e.g., dust particles, gels, or burrs on the end faces of cut pieces) in the flexion of each test piece was visually confirmed beforehand.

A sheet having such a defect may be broken at a value much lower than its ability. The number of samples was set to 10. Two values, the highest and lowest ones, were excluded from data, and an arithmetic average value of the remaining 8 flex numbers to break was regarded as the folding strength of the sheet and evaluated on the basis of the following evaluation criteria.

Results about average fold number in MIT folding endurance testing machine

◎+: 2000 or more
◎: 1000 or more and less than 2000
○: 500 or more and less than 1000
△: 100 or more and less than 500
✕: less than 100

When strip test pieces were cut out of the extruded products, cutout in the strip longitudinal direction along the flow direction of extrusion was defined as MD, and cutout in the strip longitudinal direction perpendicular to the flow direction of extrusion was defined as TD. In actual electronic component packaging materials such as carrier tapes, folding strength in the MD direction corresponds to practical folding strength. A sheet having a fold number of 100 or more in any of the MD direction and the TD direction was judged as having sufficient rigidity.

(Vicat softening temperature)

The extruded products obtained as mentioned above were each cut, and sheet pieces were layered, heated in a heat press molding machine, and then cooled to prepare a strip test piece having a width of 10 mm, a thickness of 4 mm, and a length of 50 mm.

The Vicat softening temperature stipulated by ISO306 was measured using the test piece at a temperature increase rate of 50°C/hr with a load of 10 N and evaluated according to the following criteria.

◎: 90°C or higher
○: 85°C or higher and lower than 90°C
△: 80°C or higher and lower than 85°C
✕: lower than 80°C

[Examples 1 to 11, 13 and 14, Comparative Examples 1 to 24, and Reference Examples 1 to 3]

Pellets were dry-blended at each predetermined blending ratio using the block copolymer a and the copolymer b produced as described above, or the polymer c, and subjected to injection molding and T die extrusion sheet molding according to the blending ratios shown in Tables 3 and 4 below.

A flat sheet having a thickness of 1 mm, short sides of 100 mm, and long sides of 150 mm in terms of a mold dimension was formed by the injection molding, whereas two types of sheets differing in thickness (thickness: 0.25 mm and 0.60 mm) were prepared by the T die extrusion molding.

Various characteristics mentioned above were evaluated using the obtained molded products.

The same test as described above was conducted on milky white translucent sheets (thickness: 0.60 mm and 0.25 mm) made of a composition of a block copolymer (Asaflex 825 manufactured by Asahi Kasei Corp.), general-purpose polystyrene (GPPS, PSJ Polystyrene 685 manufactured by PS Japan Corp.) and high-impact polystyrene (HIPS, PSJ Polystyrene HT478 manufactured by PS Japan Corp.) in Reference Examples 1 and 2, and on a transparent sheet PET-G (SK Chemicals Skygreen S2008) sheet (thickness: 0.45 mm) in Reference Example 3.

The blending composition and the evaluation results are shown in Tables 3 and 4 below.

Table 3 shows the composition and evaluation results of the injection-molded products, and Table 4 shows the composition and evaluation results of the extruded products.

[Table 3]

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Comparative Example 1 | Polymer species | a1 | 1 | Not used | | 30.3 | 27 | 0.6 | △ |
| | Blending ratio (mass%) | 40 | 60 | | | | | | |
| Comparative Example 2 | Polymer species | a2 | 1 | Not used | | 30.3 | 27 | 0.5 | △ |
| | Blending ratio (mass%) | 40 | 60 | | | | | | |
| Comparative Example 3 | Polymer species | a3 | 1 | Not used | | 30.3 | 27 | 0.5 | △ |
| | Blending ratio (mass%) | 40 | 60 | | | | | | |
| Comparative Example 4 | Polymer species | a3 | 1 | Not used | | 30.3 | 27 | 0.4 | × |
| | Blending ratio (mass%) | 60 | 40 | | | | | | |
| Example 1 | Polymer species | a1 | 2 | 2 | | 17.2 | 32 | 0.6 | O |
| | Blending ratio (mass%) | 40 | 40 | 20 | | | | | |
| Comparative Example 5 | Polymer species | a2 | 2 | Not used | | 20.0 | 29 | 0.6 | × |
| | Blending ratio (mass%) | 40 | 60 | | | | | | |
| Example 2 | Polymer species | a2 | 2 | 2 | | 18.7 | 31 | 0.5 | O |
| | Blending ratio (mass%) | 40 | 50 | 10 | | | | | |

(continued)

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Example 3 | Polymer species | a2 | 2 | 2 | | 17.2 | 32 | 0.5 | O |
| | Blending ratio (mass%) | 40 | 40 | 20 | | | | | |
| Example 4 | Polymer species | a2 | 2 | 2 | | 15.7 | 33 | 0.5 | O |
| | Blending ratio (mass%) | 40 | 30 | 30 | | | | | |
| Example 13 | Polymer species | a2 | 6 | | | 19.1 | 34 | 0.7 | O |
| | Blending ratio (mass%) | 40 | 60 | | | | | | |
| Comparative Example 6 | Polymer species | a2 | 2 | 2 | | 14.1 | 32 | 0.5 | O |
| | Blending ratio (mass%) | 40 | 20 | 40 | | | | | |
| Comparative Example 7 | Polymer species | a2 | 2 | 2 | | 12.8 | 31 | 0.4 | O |
| | Blending ratio (mass%) | 40 | 10 | 50 | | | | | |
| Comparative Example 8 | Polymer species | a2 | Not used | 2 | | 11.2 | 31 | 0.4 | O |
| | Blending ratio (mass%) | 40 | | 60 | | | | | |
| Comparative Example 9 | Polymer species | a2 | 2 | Not used | | 20.0 | 29 | 0.6 | × |
| | Blending ratio (mass%) | 40 | 60 | | | | | | |

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Example 5 | Polymer species | a2 | 2 | 2 | | 18.7 | 31 | 0.6 | O |
| | Blending ratio (mass%) | 40 | 50 | 10 | | | | | |
| Example 6 | Polymer species | a2 | 2 | 2 | | 17.2 | 32 | 0.6 | ○ |
| | Blending ratio (mass%) | 40 | 40 | 20 | | | | | |
| Example 7 | Polymer species | a2 | 2 | 2 | | 15.7 | 33 | 0.6 | O |
| | Blending ratio (mass%) | 40 | 30 | 30 | | | | | |
| Comparative Example 10 | Polymer species | a2 | 2 | 2 | | 14.1 | 32 | 0.5 | O |
| | Blending ratio (mass%) | 40 | 20 | 40 | | | | | |
| Comparative Example 11 | Polymer species | a2 | 2 | 2 | | 12.8 | 31 | 0.5 | O |
| | Blending ratio (mass%) | 40 | 10 | 50 | | | | | |
| Comparative Example 12 | Polymer species | a2 | Not used | 2 | | 11.2 | 31 | 0.4 | O |
| | Blending ratio (mass%) | 40 | | 60 | | | | | |
| Example 8 | Polymer species | a2 | 2 | 2 | | 17.9 | 32 | 0.5 | O |
| | Blending ratio (mass%) | 60 | 30 | 10 | | | | | |

EP 3 916 050 A1

(continued)

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Example 14 | Polymer species | a2 | 6 | | | 19.1 | 34 | 0.6 | O |
| | Blending ratio (mass%) | 60 | 40 | | | | | | |
| Comparative Example 13 | Polymer species | a3 | 2 | 2 | | 17.2 | 32 | 4.5 | ○ |
| | Blending ratio (mass%) | 40 | 40 | 20 | | | | | |
| Comparative Example 14 | Polymer species | a3 | 2 | 2 | | 15.7 | 33 | 5.5 | O |
| | Blending ratio (mass%) | 60 | 20 | 20 | | | | | |
| Comparative Example 15 | Polymer species | a3 | 3 | 3 | | 15.3 | 32 | 7.5 | O |
| | Blending ratio (mass%) | 40 | 40 | 20 | | | | | |
| Comparative Example 16 | Polymer species | a4 | 3 | 3 | | 15.4 | 32 | 4.2 | O |
| | Blending ratio (mass%) | 40 | 40 | 20 | | | | | |
| Example 9 | Polymer species | a4 | 3 | 3 | | 16.5 | 31 | 3.2 | O |
| | Blending ratio (mass%) | 40 | 50 | 10 | | | | | |
| Example 10 | Polymer species | a5 | 2 | 2 | | 17.2 | 32 | 0.6 | O |
| | Blending ratio (mass%) | 40 | 40 | 20 | | | | | |

(continued)

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Example 11 | Polymer species | a6 | 2 | 2 | | 17.2 | 32 | 0.7 | × |
| | Blending ratio (mass%) | 40 | 40 | 20 | | | | | |
| Comparative Example 17 | Polymer species | a7 | 2 | 2 | | 17.2 | 32 | Over 40 (opaque) | △ |
| | Blending ratio (mass%) | 40 | 40 | 20 | | | | | |
| Comparative Example 18 | Polymer species | a7 | 3 | 3 | | 15.4 | 32 | 8.0 | △ |
| | Blending ratio (mass%) | 40 | 40 | 20 | | | | | |
| Comparative Example 19 | Polymer species | a2 | 4 | 4 | | 17.9 | 32 | Over 40 (opaque) | O |
| | Blending ratio (mass%) | 40 | 40 | 20 | | | | | |
| Comparative Example 20 | Polymer species | a2 | 4 | 4 | | 19.0 | 31 | Over 40 (opaque) | ○ |
| | Blending ratio (mass%) | 60 | 30 | 10 | | | | | |
| Comparative Example 21 | Polymer species | a2 | 5 | 5 | | 20.0 | 31 | Over 40 (opaque) | △ |
| | Blending ratio (mass%) | 40 | 40 | 20 | | | | | |
| Comparative Example 22 | Polymer species | a2 | 5 | 5 | | 20.8 | 31 | Over 40 (opaque) | △ |
| | Blending ratio (mass%) | 60 | 30 | 10 | | | | | |

(continued)

| | | Block copolymer a | Copolymer (b-1) | Copolymer (b-2) | Polymer (c) | Copolymer b | | Block copolymer composition | |
|---|---|---|---|---|---|---|---|---|---|
| | | | | | | Mw | Half width | Outer haze of injection-molded product (%) | Flatness evaluation |
| Comparative Example 23 | Polymer species | a1 | | | 60 | 26.1 | 27 | 2.0 | ○ |
| | Blending ratio (mass%) | 40 | | | | | | | |
| Comparative Example 24 | Polymer species | a2 | | | 60 | 26.1 | 27 | 2.5 | O |
| | Blending ratio (mass%) | 40 | | | | | | | |
| Reference Example 1 | Polymer species | Conventional type: block copolymer + styrene-type resin + high-impact polystyrene | | | | | | 18 | × |
| | Blending ratio (mass%) | | | | | | | | |
| Reference Example 2 | Polymer species | Conventional type: block copolymer + styrene-type resin + high-impact polystyrene | | | | | | 10 | × |
| | Blending ratio (mass%) | | | | | | | | |
| Reference Example 3 | Polymer species | PET-G | | | | | | 0.5 | × |
| | Blending ratio (mass%) | 100 | | | | | | | |

[Table 4]

| | | Block copolymer a | Copolymer (b-1) | Copolymer (b-2) | Polymer (c) | Sheet thickness (mm) | MIT folding strength MD | TD | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Comparative Example 1 | Polymer species | a1 | 1 | Not used | | 0.60 | ◎ | ◎ | 1.8 | 74 | × |
| | Blending ratio (mass%) | 40 | 60 | | | | | | | | |
| Comparative Example 2 | Polymer species | a2 | 1 | Not used | | 0.60 | ◎ | ◎ | 1.5 | 74 | × |
| | Blending ratio (mass%) | 40 | 60 | | | | | | | | |
| Comparative Example 3 | Polymer species | a3 | 1 | Not used | | 0.60 | ◎ | ◎ | 1.5 | 75 | × |
| | Blending ratio (mass%) | 40 | 60 | | | | | | | | |
| Comparative Example 4 | Polymer species | a3 | 1 | Not used | | 0.25 | ◎+ | ◎+ | 1.0 | 74 | × |
| | Blending ratio (mass%) | 60 | 40 | | | | | | | | |
| Example 1 | Polymer species | a1 | 2 | 2 | | 0.60 | ◎ | ◎ | 3.2 | 97 | ◎ |
| | Blending ratio (mass%) | 40 | 40 | 20 | | | | | | | |
| Comparative Example 5 | Polymer species | a2 | 2 | Not used | | 0.60 | ◎+ | ◎+ | 24 | 97 | ◎ |
| | Blending ratio (mass%) | 40 | 60 | | | | | | | | |
| Example 2 | Polymer species | a2 | 2 | 2 | | 0.60 | ◎ | ◎ | 2.5 | 97 | ◎ |
| | Blending ratio (mass%) | 40 | 50 | 10 | | | | | | | |
| Example 3 | Polymer species | a2 | 2 | 2 | | 0.60 | ◎ | ◎ | 1.6 | 97 | ◎ |
| | Blending ratio (mass%) | 40 | 40 | 20 | | | | | | | |

| | | Block copolymer a | Copolymer (b-1) | Copolymer (b-2) | Polymer (c) | Sheet thickness (mm) | MIT folding strength MD | TD | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Example 4 | Polymer species | a2 | 2 | 2 | | 0.60 | ◎ | ◎ | 1.5 | 97 | ◎ |
| | Blending ratio (mass%) | 40 | 30 | 30 | | | | | | | |
| Example 13 | Polymer species | a2 | 6 | | | 0.60 | ◎ | ◎ | 1.8 | 96 | ◎ |
| | Blending ratio (mass%) | 40 | 60 | | | | | | | | |
| Comparative Example 6 | Polymer species | a2 | 2 | 2 | | 0.60 | × | ◎ | 1.4 | 96 | ◎ |
| | Blending ratio (mass%) | 40 | 20 | 40 | | | | | | | |
| Comparative Example 7 | Polymer species | a2 | 2 | 2 | | 0.60 | × | ◎ | 1.2 | 96 | ◎ |
| | Blending ratio (mass%) | 40 | 10 | 50 | | | | | | | |
| Comparative Example 8 | Polymer species | a2 | Not used | 2 | | 0.60 | × | × | 1.2 | 96 | ◎ |
| | Blending ratio (mass%) | 40 | | 60 | | | | | | | |
| Comparative Example 9 | Polymer species | a2 | 2 | Not used | | 0.25 | ◎+ | ◎+ | 9.5 | 96 | ◎ |
| | Blending ratio (mass%) | 40 | 60 | | | | | | | | |
| Example 5 | Polymer species | a2 | 2 | 2 | | 0.25 | ◎ | ◎+ | 3.5 | 96 | ◎ |
| | Blending ratio (mass%) | 40 | 50 | 10 | | | | | | | |
| Example 6 | Polymer species | a2 | 2 | 2 | | 0.25 | O | ◎+ | 2.8 | 96 | ◎ |
| | Blending ratio (mass%) | 40 | 40 | 20 | | | | | | | |

EP 3 916 050 A1

40

(continued)

| | | Block copolymer a | Copolymer (b-1) | Copolymer (b-2) | Polymer (c) | Sheet thickness (mm) | MIT folding strength MD | TD | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Example 7 | Polymer species | a2 | 2 | 2 | | 0.25 | O | ◎+ | 2.5 | 96 | ◎ |
| | Blending ratio (mass%) | 40 | 30 | 30 | | | | | | | |
| Comparative Example 10 | Polymer species | a2 | 2 | 2 | | 0.25 | × | ◎+ | 2.1 | 96 | ◎ |
| | Blending ratio (mass%) | 40 | 20 | 40 | | | | | | | |
| Comparative Example 11 | Polymer species | a2 | 2 | 2 | | 0.25 | × | ◎+ | 1.8 | 96 | ◎ |
| | Blending ratio (mass%) | 40 | 10 | 50 | | | | | | | |
| Comparative Example 12 | Polymer species | a2 | Not used | 2 | | 0.25 | × | × | 1.4 | 96 | ◎ |
| | Blending ratio (mass%) | 40 | | 60 | | | | | | | |
| Example 8 | Polymer species | a2 | 2 | 2 | | 0.60 | ◎+ | ◎+ | 2.1 | 93 | ◎ |
| | Blending ratio (mass%) | 60 | 30 | 10 | | | | | | | |
| Example 14 | Polymer species | a2 | 6 | | | 0.60 | ◎+ | ◎+ | 2.5 | 92 | ◎ |
| | Blending ratio (mass%) | 60 | 40 | | | | | | | | |
| Comparative Example 13 | Polymer species | a3 | 2 | 2 | | 0.60 | O | O | 5.5 | 97 | ◎ |
| | Blending ratio (mass%) | 40 | 40 | 20 | | | | | | | |
| Comparative Example 14 | Polymer species | a3 | 2 | 2 | | 0.60 | ◎ | ◎ | 6.5 | 94 | ◎ |
| | Blending ratio (mass%) | 60 | 20 | 20 | | | | | | | |

EP 3 916 050 A1

| | | Block copolymer a | Copolymer (b-1) | Copolymer (b-2) | Polymer (c) | Sheet thickness (mm) | MIT folding strength MD | TD | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Comparative Example 15 | Polymer species | a3 | 3 | 3 | | 0.60 | × | O | 9.5 | 97 | ◎ |
| | Blending ratio (mass%) | 40 | 40 | 20 | | | | | | | |
| Comparative Example 16 | Polymer species | a4 | 3 | 3 | | 0.60 | × | O | 5.0 | 96 | ◎ |
| | Blending ratio (mass%) | 40 | 40 | 20 | | | | | | | |
| Example 9 | Polymer species | a4 | 3 | 3 | | 0.60 | O | ◎ | 4.0 | 96 | ◎ |
| | Blending ratio (mass%) | 40 | 10 | 50 | | | | | | | |
| Example 10 | Polymer species | a5 | 2 | 2 | | 0.60 | O | O | 1.8 | 97 | ◎ |
| | Blending ratio (mass%) | 40 | 40 | 20 | | | | | | | |
| Example 11 | Polymer species | a6 | 2 | 2 | | 0.60 | ○ | O | 3.8 | 79 | × |
| | Blending ratio (mass%) | 40 | 40 | 20 | | | | | | | |
| Comparative Example 17 | Polymer species | a7 | 2 | 2 | | 0.60 | ○ | ◎ | Over 40 (opaque) | 82 | △ |
| | Blending ratio (mass%) | 40 | 40 | 20 | | | | | | | |
| Comparative Example 18 | Polymer species | a7 | 3 | 3 | | 0.60 | × | △ | 14.0 | 82 | △ |
| | Blending ratio (mass%) | 40 | 40 | 20 | | | | | | | |
| Comparative Example 19 | Polymer species | a2 | 4 | 4 | | 0.60 | × | × | Over 40 (opaque) | 98 | ◎ |
| | Blending ratio (mass%) | 40 | 40 | 20 | | | | | | | |

EP 3 916 050 A1

(continued)

| | | Block copolymer a | Copolymer (b-1) | Copolymer (b-2) | Polymer (c) | Sheet thickness (mm) | MIT folding strength MD TD | | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Comparative Example 20 | Polymer species | a2 | 4 | 4 | | 0.60 | × | △ | Over 40 (opaque) | 95 | ◎ |
| | Blending ratio (mass%) | 60 | 30 | 10 | | | | | | | |
| Comparative Example 21 | Polymer species | a2 | 5 | 5 | | 0.60 | × | × | Over 40 (opaque) | 110 | ◎ |
| | Blending ratio (mass%) | 40 | 40 | 20 | | | | | | | |
| Comparative Example 22 | Polymer species | a2 | 5 | 5 | | 0.60 | × | × | Over 40 (opaque) | 102 | ◎ |
| | Blending ratio (mass%) | 60 | 30 | 10 | | | | | | | |
| Comparative Example 23 | Polymer species | a1 | | | Polymer (c) | 0.60 | × | O | 3.0 | 97 | ◎ |
| | Blending ratio (mass%) | 40 | | | 60 | | | | | | |
| Comparative Example 24 | Polymer species | a2 | | | Polymer (c) | 0.60 | × | △ | 5.0 | 97 | ◎ |
| | Blending ratio (mass%) | 40 | | | 60 | | | | | | |
| Reference Example 1 | Polymer species | Conventional type: block copolymer + styrene-type resin + high-impact polystyrene | | | | 0.60 | × | × | 20 | 96 | ◎ |
| | Blending ratio (mass%) | | | | | | | | | | |
| Reference Example 2 | Polymer species | Conventional type: block copolymer+ styrene-type resin + high-impact polystyrene | | | | 0.25 | × | ◎ | 12 | 96 | ◎ |
| | Blending ratio (mass%) | | | | | | | | | | |

| | | Block copolymer a | Copolymer (b-1) | Copolymer (b-2) | Polymer (c) | Sheet thickness (mm) | MIT folding strength MD TD | | Outer haze of extruded product (%) | Heat resistance (Vicat softening temperature) | |
|---|---|---|---|---|---|---|---|---|---|---|---|
| | | | | | | | | | | Softening temperature (°C) | Evaluation |
| Reference Example 3 | Polymer species | PET-G 100 | | | | 0.45 | × | × | 1.9 | 73 | × |
| | Blending ratio (mass%) | | | | | | | | | | |

From Examples 1 to 11, 13 and 14, the molded product of the present invention was found to have favorable flatness with less warpage in the case of an injection-molded product.

In injection molding, a mirrored surface on the mold surface is strongly transferred. Therefore, all the combinations of the block copolymer a and the copolymer b with small difference in refractive index offered a small outer haze value and exerted favorable transparency.

The molded product of the present invention was also found to have excellent transparency in the case of extrusion molding.

Particularly, the conventional milky white composition sheets shown in Reference Examples 1 and 2 are known to have large sheet thickness dependence of folding strength and, unfortunately, extremely reduce the folding strength of thick sheets of 0.6 mm, even if thin sheets of 0.3 mm or smaller exert favorable folding strength. However, the extruded product of the present invention was found to have relatively small thickness dependence of folding strength and to exert favorable folding strength even as a thick sheet.

The PET-G sheet shown in Reference Example 3 was found to have low folding strength and to be much inferior in this respect to the extruded product of the present invention.

Moreover, the extruded product of the present invention also had moderate rigidity and heat distortion resistance, demonstrating that the extruded product of the present invention can be suitably used as an electronic component packaging material such as a carrier tape.

[Example 12]

60 parts of the block copolymer a2, 30 parts of the copolymer (b-1)2, and 10 parts of the copolymer (b-2)2 were mixed and charged to an extruder to produce a three-layer sheet having surface and back layer thicknesses of 0.03 mm, an intermediate layer thickness of 0.19 mm, and a total thickness of 0.25 mm.

All the 3 layers constituting the extruded sheet had the same blending composition. Only a fresh material was used for the surface and back layers, and 70% by mass of a fresh material was mixed with 30% by mass of a powder of end portions after trimming for the intermediate layer.

In extrusion sheet molding, a three-layer film molding machine (with a single screw and Maddock, screw diameter: 32 mm, L/D = 28, T die width: 400 mm, mirrored roll) manufactured by PLABOR Research Laboratory of Plastics Technology Co., Ltd. was used. The three-layer sheet was prepared by adjusting the number of screw rotations and a roll take-over speed at a cylinder temperature of 210°C and a roll temperature of 70°C.

The blending composition and evaluation results are shown in Table 5 below.

[Table 5]

| | | Block copolymer a | Copolymer (b-1) | Copolymer (b-2) | Sheet thickness (mm) | MIT folding strength MD TD | | Outer haze (%) | Heat resistance (Vicat softening temperature) | |
|---|---|---|---|---|---|---|---|---|---|---|
| | | | | | | | | | Softening temperature (°C) | Evaluation |
| Example 12 | Polymer species | a2 | 2 | 2 | 0.25 | ◎+ | ◎+ | 1.6 | 93 | ◎ |
| | Blending ratio (mass%) | 60 | 30 | 10 | | | | | | |

[Examples 15 and 16]

The molded products having a thickness of 0.25 mm, obtained in Examples 6 and 12, were used. Each molded product was heated at 110°C and molded by press molding into a carrier tape having a pocket portion accommodating an electronic component (Examples 15 and 16).

The obtained carrier tape possessed transparency and moderate rigidity and heat resistance and had great folding strength without being easily broken even if intentionally bent, and thus confirmed to be suitable for actual use.

The present application is based on the Japanese patent application (Japanese Patent Application No. 2019-009876) filed in the Japan Patent Office on January 24, 2019, the contents of which are incorporated herein by reference in their entirety.

Industrial Applicability

The molded product of the present invention is capable of providing a molded product that is excellent in the suppression of warpage as an injection-molded product, and drastically decreases an outer haze and improves transparency as an extruded product, and thus has industrial applicability as a packaging member for a food package, a medical equipment package, an electronic component package, and the like.

**Claims**

1. A block copolymer composition comprising block copolymer a and copolymer b, wherein

   a mass ratio between the block copolymer a and the copolymer b is block copolymer a/copolymer b = 20/80 to 75/25,
   the block copolymer a is a block copolymer comprising at least one polymer block mainly comprising a vinyl aromatic hydrocarbon monomer unit, and at least one polymer block mainly comprising a conjugated diene monomer unit,
   a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,
   the copolymer b is a random copolymer of a vinyl aromatic hydrocarbon monomer unit and a (meth)acrylic acid and/or (meth)acrylic acid alkyl ester monomer unit,
   a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10,
   the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve, and
   an outer haze value measured in accordance with ISO14782 is 4.0% or less.

2. A molded product of a block copolymer composition comprising block copolymer a and copolymer b, wherein

   a mass ratio between the block copolymer a and the copolymer b is block copolymer a/copolymer b = 20/80 to 75/25,
   the block copolymer a is a block copolymer comprising at least one polymer block mainly comprising a vinyl aromatic hydrocarbon monomer unit, and at least one polymer block mainly comprising a conjugated diene monomer unit,
   a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,
   the copolymer b is a random copolymer of a vinyl aromatic hydrocarbon monomer unit and a (meth)acrylic acid and/or (meth)acrylic acid alkyl ester monomer unit,
   a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10,
   the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve, and
an outer haze value measured in accordance with ISO14782 is 4.0% or less.

3. The molded product according to claim 2, wherein

the copolymer b is a mixture of copolymers having at least two types of weight-average molecular weights, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60, and the outer haze value measured in accordance with ISO14782 is 4.0% or less.

4. The block copolymer composition according to claim 1, wherein the copolymer b is a mixture of copolymers having at least two types of weight-average molecular weights, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60.

5. The block copolymer composition according to claim 1 or 4, wherein the block copolymer a has at least two polymer blocks each mainly comprising a vinyl aromatic hydrocarbon monomer unit.

6. The molded product according to claim 2 or 3, wherein the block copolymer a has at least two polymer blocks each mainly comprising a vinyl aromatic hydrocarbon monomer unit.

7. The block copolymer composition according to any one of claims 1, 4, and 5, wherein

at least one peak molecular weight derived from the block copolymer a is present within a molecular weight range of 30,000 or larger and 300,000 or smaller in the molecular weight distribution curve measured by a gel permeation chromatography measurement method,
a number-average molecular weight (Mn) of polymer block S mainly comprising a vinyl aromatic hydrocarbon monomer unit in the block copolymer a is 10,000 or larger and 60,000 or smaller, and
a molecular weight distribution (Mw/Mn) of the polymer block S is 1.5 or more and 4.0 or less.

8. The molded product according to any one of claims 2, 3, and 6, wherein

at least one peak molecular weight derived from the block copolymer a is present within a molecular weight range of 30,000 or larger and 300,000 or smaller in the molecular weight distribution curve measured by a gel permeation chromatography measurement method,
a number-average molecular weight (Mn) of polymer block S mainly comprising a vinyl aromatic hydrocarbon monomer unit in the block copolymer a is 10,000 or larger and 60,000 or smaller, and
a molecular weight distribution (Mw/Mn) of the polymer block S is 1.5 or more and 4.0 or less.

9. The block copolymer composition according to any one of claims 1, 4, 5, and 7, wherein the (meth)acrylic acid and/or (meth)acrylic acid alkyl ester monomer unit which is a constituent unit of the copolymer b is a methyl methacrylate monomer unit.

10. The molded product according to any one of claims 2, 3, 6, and 8, wherein the (meth)acrylic acid and/or (meth)acrylic acid alkyl ester monomer unit which is a constituent unit of the copolymer b is a methyl methacrylate monomer unit.

11. The block copolymer composition according to any one of claims 1, 4, 5, 7, and 9, wherein a Vicat softening temperature stipulated by ISO306 and measured at a temperature increase rate of 50°C/hr with a load of 10 N is 80°C or higher.

12. The molded product according to any one of claims 2, 3, 6, 8, and 10, wherein a Vicat softening temperature stipulated by ISO306 and measured at a temperature increase rate of 50°C/hr with a load of 10 N is 80°C or higher.

**13.** The molded product according to any one of claims 2, 3, 6, 8, 10, and 12 which is an extruded product.

**14.** The molded product according to any one of claims 2, 3, 6, 8, 10, and 12 which is an injection-molded product.

**15.** A method for producing a molded product, comprising the steps of:

mixing block copolymer a and copolymer b to obtain a mixture; and
extruding or injecting the mixture, wherein
the block copolymer a is a block copolymer comprising at least one polymer block mainly comprising a vinyl aromatic hydrocarbon monomer unit, and at least one polymer block mainly comprising a conjugated diene monomer unit,
a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,
the copolymer b is a random copolymer of a vinyl aromatic hydrocarbon monomer unit and a (meth)acrylic acid and/or (meth)acrylic acid alkyl ester monomer unit,
a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10, and
the copolymer b has a weight-average molecular weight (Mw) of 150,000 or larger and 250,000 or smaller as measured by a gel permeation chromatography measurement method, and a half width (ratio of a width at a position of 50% of a peak height to a length from 1,000 to 1,000,000 on the logarithmic abscissa) of 30% or more in a molecular weight distribution curve.

**16.** A method for producing a molded product, comprising the steps of:

mixing block copolymer a and copolymer b to obtain a mixture; and
extruding or injecting the mixture, wherein
the block copolymer a is a block copolymer comprising at least one polymer block mainly comprising a vinyl aromatic hydrocarbon monomer unit, and at least one polymer block mainly comprising a conjugated diene monomer unit,
a mass ratio between the vinyl aromatic hydrocarbon monomer unit and the conjugated diene monomer unit in the block copolymer a is vinyl aromatic hydrocarbon monomer unit/conjugated diene monomer unit = 50/50 to 95/5,
the copolymer b is a random copolymer of a vinyl aromatic hydrocarbon monomer unit and a (meth)acrylic acid and/or (meth)acrylic acid alkyl ester monomer unit,
a mass ratio between the vinyl aromatic hydrocarbon monomer unit and the (meth)acrylic acid and/or (meth)acrylic acid alkyl ester monomer unit in the copolymer b is vinyl aromatic hydrocarbon monomer unit/((meth)acrylic acid and/or (meth)acrylic acid alkyl ester monomer unit) = 50/50 to 90/10, and
the copolymer b is a mixture of at least two types of copolymers, a copolymer (b-1) having a weight-average molecular weight (Mw) of 150,000 or larger and 350,000 or smaller as measured by a gel permeation chromatography measurement method, and a copolymer (b-2) having a weight-average molecular weight (Mw) of 50,000 or larger and smaller than 150,000, with a compositional ratio between the copolymer (b-1) and the copolymer (b-2) being copolymer (b-1)/copolymer (b-2) = 95/5 to 40/60.

**17.** The molded product according to any one of claims 2, 3, 6, 8, 10, 12, 13, and 14 which is a packaging member.

**18.** A method for adjusting a haze value of an extruded product of a block copolymer composition comprising

block copolymer a comprising at least one polymer block mainly comprising a vinyl aromatic hydrocarbon monomer unit, and at least one polymer block mainly comprising a conjugated diene monomer unit, and
copolymer b which is a random copolymer of a vinyl aromatic hydrocarbon monomer unit and a (meth)acrylic acid and/or (meth)acrylic acid alkyl ester monomer unit, the method comprising:

setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5;
setting a mass ratio between the vinyl aromatic hydrocarbon monomer unit and the (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10; and

adjusting a weight-average molecular weight and a half width of the copolymer (b) such that the copolymer b has a weight-average molecular weight (Mw) of 150,000 or larger and 250,000 or smaller as measured by a gel permeation chromatography measurement method, and a half width (ratio of a full width at a position of 50% of a peak height to a length from 1,000 to 1,000,000 on the logarithmic abscissa) of 30% or more in a molecular weight distribution curve.

**19.** A method for adjusting a haze value of a molded product of a block copolymer composition comprising

block copolymer a comprising at least one polymer block mainly comprising a vinyl aromatic hydrocarbon monomer unit, and at least one polymer block mainly comprising a conjugated diene monomer unit, and copolymer b which is a random copolymer of a vinyl aromatic hydrocarbon monomer unit and a (meth)acrylic acid and/or (meth)acrylic acid alkyl ester monomer unit, the method comprising:

setting a mass ratio between the vinyl aromatic hydrocarbon monomer unit and the conjugated diene monomer unit in the block copolymer a to vinyl aromatic hydrocarbon monomer unit/conjugated diene monomer unit = 50/50 to 95/5;

setting a mass ratio between the vinyl aromatic hydrocarbon monomer unit and the (meth)acrylic acid and/or (meth)acrylic acid alkyl ester monomer unit in the copolymer b to vinyl aromatic hydrocarbon monomer unit/((meth)acrylic acid and/or (meth)acrylic acid alkyl ester monomer unit) = 50/50 to 90/10;

allowing the copolymer b to contain a copolymer (b-1) having a weight-average molecular weight (Mw) of 150,000 or larger and 350,000 or smaller as measured by a gel permeation chromatography measurement method and a copolymer (b-2) having a weight-average molecular weight (Mw) of 50,000 or larger and smaller than 150,000; and

setting a compositional ratio between the copolymer (b-1) and the copolymer (b-2) to copolymer (b-1)/copolymer (b-2) = 95/5 to 40/60.

## INTERNATIONAL SEARCH REPORT

| International application No. |
|---|
| PCT/JP2020/000856 |

A. CLASSIFICATION OF SUBJECT MATTER
Int.Cl. C08L25/14(2006.01)i, C08L53/02(2006.01)i
FI: C08L53/02, C08L25/14

According to International Patent Classification (IPC) or to both national classification and IPC

B. FIELDS SEARCHED

Minimum documentation searched (classification system followed by classification symbols)
Int.Cl. C08L25/00-25/18, C08L53/00-53/02, C08J5/18, B65D65/00-65/46

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P, A | JP 2019-94387 A (ASAHI KASEI CORPORATION) 20.06.2019 (2019-06-20), claims, paragraphs [0017], [0064], [0077], examples | 1-19 |
| A | JP 2005-298775 A (DENKI KAGAKU KOGYO KK) 27.10.2005 (2005-10-27), claims, paragraphs [0018], [0024], [0025], examples | 1-19 |
| A | JP 2007-177119 A (PS JAPAN CORP.) 12.07.2007 (2007-07-12), claims | 1-19 |
| A | JP 2008-248056 A (ASAHI KASEI CHEMICALS CORPORATION) 16.10.2008 (2008-10-16), claims | 1-19 |
| A | JP 2003-128861 A (ASAHI KASEI CORPORATION) 08.05.2003 (2003-05-08), claims | 1-19 |
| A | JP 2006-249446 A (DAINIPPON INK AND CHEMICALS INC.) 21.09.2006 (2006-09-21), claims | 1-19 |

☐ Further documents are listed in the continuation of Box C.        ☒ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 12.03.2020 | 24.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| INTERNATIONAL SEARCH REPORT | International application No. |
| :---: | :--- |
| Information on patent family members | PCT/JP2020/000856 |

```
JP 2019-94387 A    20.06.2019    (Family: none)

JP 2005-298775 A   27.10.2005    (Family: none)

JP 2007-177119 A   12.07.2007    (Family: none)

JP 2008-248056 A   16.10.2008    (Family: none)

JP 2003-128861 A   08.05.2003    (Family: none)

JP 2006-249446 A   21.09.2006    (Family: none)
```

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6240098 A
- JP 3619286 B
- JP 4317979 B
- JP 48002423 A
- JP 49036957 A
- JP 57049567 A
- JP 58011446 A
- US 5708092 A
- GB 2241239 A
- US 5527753 A
- JP 2019009876 A

**Non-patent literature cited in the description**

- **I.M. KOLTHOFF et al.** *J. Polym. Sci.,* 1946, vol. 1, 429